# FASCICULE DE BREVET EUROPEEN

(11) **EP 4 064 317 B1**
(45) Date de publication et mention de la délivrance du brevet: **03.01.2024**
(21) Numéro de dépôt: 22164267.1
(22) Date de dépôt: 25.03.2022
(51) Int. Cl.: H01H 71/52, H01H 83/22

(54) **DISPOSITIF DE PROTECTION ÉLECTRIQUE ET TABLEAU ÉLECTRIQUE COMPRENANT UN TEL DISPOSITIF DE PROTECTION**
ELEKTRISCHE SCHUTZVORRICHTUNG UND ELEKTRISCHE SCHALTTAFEL MIT EINER SOLCHEN SCHUTZVORRICHTUNG
ELECTRICAL PROTECTION DEVICE AND ELECTRICAL SWITCHBOARD COMPRISING SUCH A PROTECTION DEVICE

(30) Priorité: 26.03.2021 FR 2103123
(43) Date de publication de la demande: 28.09.2022
(73) Titulaire: Schneider Electric Industries SAS, 92500 Rueil-Malmaison (FR)
(72) Inventeur: BURNOT, Claude, 38130 ECHIROLLES (FR); PUPIN, Thomas, 38100 GRENOBLE (FR)
(74) Mandataire: Lavoix

(56) Documents cités:
- EP-A1- 0 570 647
- EP-A1- 0 901 142
- EP-A1- 3 451 360

## Description

La présente invention concerne un dispositif de protection électrique et un tableau électrique comprenant un tel dispositif de protection.

Une installation électrique d'un bâtiment comporte généralement un tableau électrique, reliant cette installation électrique à un réseau de distribution d'électricité collectif et comportant divers dispositifs de protection, de commande et de surveillance de l'installation électrique. Parmi les dispositifs de protection électrique, on connaît notamment un disjoncteur, qui vise à protéger l'installation électrique, ou une personne, vis-à-vis d'un défaut électrique d'un circuit électrique de l'installation, en ouvrant le circuit électrique. Par exemple, le disjoncteur est déclenché par une surcharge, un court-circuit ou un défaut électrique différentiel au sein de ce circuit.

Plus précisément, un tel dispositif de protection électrique comprend un déclencheur, qui détecte un type prédéterminé de défaut électrique et qui, le cas échéant, déclenche un mécanisme de commutation pour ouvrir le circuit. Dans le cas d'un déclencheur différentiel, le déclencheur mesure une différence entre les courants de phase et les courants de neutre du circuit et déclenche le mécanisme de commutation si cette différence dépasse un seuil prédéterminé. En effet, cette différence peut traduire une fuite de courant par la terre.

Pour plus de facilité d'installation des dispositifs de protection électrique au sein d'un tableau électrique et pour une meilleure protection des utilisateurs, les dispositifs de protection électrique sont de plus en plus miniaturisés. Chaque dispositif comprend généralement un boîtier qui renferme le mécanisme de commutation et le déclencheur, le boîtier étant de taille standard d'un dispositif à l'autre, et étant conçu pour être monté sur un rail de fixation.

Cependant, la miniaturisation atteint ses limites, notamment pour respecter certaines normes de sécurité. Selon un premier exemple, les contacts électriques doivent être fermés avec une force suffisante. Cependant, il est difficile de concevoir un mécanisme de commutation et un déclencheur qui, tout en présentant une taille très réduite, génèrent des forces mécaniques élevées.

EP-1 884 976-A1 décrit, par exemple, un disjoncteur comprenant un mécanisme de commutation avec un verrou mobile permettant de changer les bras de levier selon des états de fonctionnement du disjoncteur. Un tel mécanisme est relativement fragile et complexe à fabriquer.

De plus, certaines normes imposent parfois de prévoir que le dispositif de protection électrique soit autonome en énergie, c'est-à-dire que le dispositif doit assurer ses fonctions de protection seulement à partir de l'énergie électrique récoltée sur la ligne électrique surveillée, sans autre alimentation externe ni alimentation interne telle qu'une batterie. Il est difficile de concevoir un déclencheur qui est à la fois autonome en énergie et capable de développer un effort élevé. De ce fait, ce type de déclencheur génère habituellement un effort très faible. Il est connu d'adjoindre au dispositif de protection électrique un boitier externe comprenant un dispositif d'assistance mécanique, mais ce boitier externe est encombrant et annule tout ou partie des efforts de miniaturisation du dispositif de protection électrique.

EP-3 451 360-A1 décrit, par exemple, un disjoncteur avec une boucle de verrouillage qui, dans une position de déverrouillage, bloque le mécanisme d'ouverture en configuration fermée. La boucle de verrouillage est maintenue en position de verrouillage par un ressort et est déplacée dans une position de déverrouillage par un déclencheur à bilame ou par un déclencheur électromagnétique, qui génèrent chacun un effort bien plus important qu'un déclencheur différentiel, en particulier si le disjoncteur est autonome en énergie.

C'est à ces problèmes qu'entend plus particulièrement remédier l'invention, en proposant un dispositif de protection électrique dont la miniaturisation est facilitée, tout en offrant de bonnes performances techniques.

À cet effet, l'invention concerne un dispositif de protection électrique, comprenant :
- un boitier,
- un premier chemin de conduction, comprenant une première borne d'entrée, une première borne de sortie et un premier contact mobile, qui est mobile par rapport au boîtier, entre :
   - une position de conduction, dans laquelle le premier contact mobile connecte électriquement la première borne d'entrée à la première borne de sortie, et
   - une position d'isolement, dans laquelle la première borne d'entrée et la première borne de sortie sont électriquement isolées l'une de l'autre ;
- un mécanisme de commutation, qui est logé dans le boîtier et qui est configuré pour basculer entre :
   - une configuration armée, dans laquelle le mécanisme de commutation met le premier contact en position de conduction, et
   - une configuration déclenchée, dans laquelle le mécanisme de commutation met le premier contact en position d'isolement ;
- un déclencheur, qui est configuré pour faire basculer le mécanisme de commutation en configuration déclenchée lorsque le déclencheur est excité par un défaut électrique d'un type prédéterminé.

Selon l'invention, le dispositif de protection électrique comprend, en outre :
- un tiroir, qui est mobile par rapport au boitier, entre une position armée, et une position déclenchée, dans laquelle le tiroir fait basculer le mécanisme de commutation en configuration déclenchée,
- un ressort de tiroir, qui applique un effort de déclenchement sur le tiroir, en prenant appui sur le boîtier, l'effort de déclenchement tendant à déplacer le tiroir de la position armée vers la position déclenchée, et
- un verrou, qui est mobile entre une position de verrouillage, dans laquelle le verrou maintient le tiroir en position armée, et une position de déverrouillage, dans laquelle le verrou autorise le tiroir à être déplacé de la position armée vers la position déclenchée,
alors que le déclencheur est configuré pour faire passer le verrou de sa position de verrouillage vers sa position de déverrouillage lorsque le déclencheur est excité.

Un des principes de l'invention est de prévoir que le mécanisme de commutation soit déclenché par le tiroir, sous l'action du ressort de tiroir, plutôt que directement par le déclencheur. Avant le déclenchement, le tiroir, chargé par le ressort de tiroir, est retenu par le verrou. Lors du déclenchement, le verrou libère le tiroir, qui est alors repoussé par le ressort de tiroir. Le tiroir, chargé par le ressort de tiroir, déclenche ainsi le mécanisme de commutation avec un effort supérieur à un effort exercé par le déclencheur seul. En ce sens, le tiroir, le ressort de tiroir et le verrou ont une fonction d'amplificateur mécanique d'effort, assurant ainsi que le déclencheur puisse déclencher le mécanisme de commutation même si le déclencheur développe un effort de déclenchement relativement faible. De manière avantageuse, on peut ainsi prévoir que le déclencheur soit particulièrement compact, ce qui facilite la miniaturisation du dispositif de protection électrique, et/ou soit excité seulement par l'énergie générée par le défaut électrique. L'invention est particulièrement adaptée au cas où le déclencheur est un déclencheur différentiel.

Selon des aspects avantageux mais non obligatoires de l'invention, un tel dispositif de protection électrique peut incorporer une ou plusieurs des caractéristiques suivantes prises isolément ou selon toute combinaison techniquement admissible :
- le mécanisme de commutation comprend :
   - une platine, qui est montée pivotante par rapport au boîtier autour d'un axe de platine, entre une position fermée et une position ouverte, la platine étant configurée pour, lorsque la platine passe de sa position fermée à sa position ouverte, déplacer le premier contact de sa position de conduction vers sa position d'isolement,
   - un ressort de platine, qui exerce un effort d'ouverture sur la première platine, tendant à déplacer la première platine de sa position fermée vers sa position ouverte,
   - un loquet de verrouillage, qui est configuré pour évoluer entre une configuration verrouillée, dans laquelle le loquet de verrouillage maintient la platine dans la position fermée, et une configuration déverrouillée, dans laquelle le loquet de verrouillage autorise la platine à pivoter de la position fermée à la position ouverte, et
   - un ressort de loquet, qui exerce un effort de blocage sur le loquet de verrouillage, tendant à ramener le loquet de verrouillage vers la configuration verrouillée, lorsque le loquet de déclenchement est dans la configuration déverrouillée, pour faire basculer le mécanisme de commutation en configuration déclenchée, le tiroir est configuré pour faire passer le loquet de verrouillage de sa configuration verrouillée à sa configuration déverrouillée, lorsque le tiroir se déplace de sa position armée vers sa position déclenchée.
- Le ressort de platine est un ressort de torsion, comprenant une première branche de sortie et une deuxième branche de sortie, la première branche de sortie étant en appui sur le boitier et la deuxième branche de sortie étant en appui sur une butée appartenant à la platine, et
   lorsque la platine passe de sa position fermée à sa position ouverte, une distance entre, d'une part, l'axe de platine et, d'autre part, un axe orthogonal à un point de contact entre la deuxième branche de sortie et la butée, augmente.
- Le déplacement du tiroir de sa position armée vers sa position déclenchée est guidé dans un plan de déplacement,
   alors que le verrou est monté pivotant par rapport au boitier autour d'un axe de verrou orthogonal au plan de déplacement du tiroir, et comprend un bras d'appui et un bras de blocage,
   que le dispositif de protection électrique comprend un ressort de verrou, qui tend à déplacer le verrou de la position de déverrouillage vers la position de verrouillage, que le tiroir comprend une encoche de verrouillage, le bras de blocage du verrou étant configuré pour coopérer avec l'encoche de verrouillage pour maintenir le tiroir en position armée,
   et que, lorsque le déclencheur est excité, le déclencheur est configuré pour entraîner le verrou de la position de verrouillage à la position de déverrouillage en exerçant un effort sur le bras d'appui.
- Le ressort de tiroir est un ressort de compression,
   alors que le tiroir comprend une portion d'appui, configurée pour coopérer avec le ressort de tiroir de manière à repousser le tiroir vers sa position déclenchée,
   et que le tiroir est mobile en translation par rapport au boitier, suivant un axe de tiroir.
- Lorsque le contact mobile est déplacé de la position de conduction vers la position d'isolement :
   - le contact mobile déplace le tiroir, de la position déclenchée vers la position armée, jusqu'à la position de réarmement,
   - le verrou reprend sa position verrouillée sous l'action de l'effort de verrouillage exercé par le ressort de verrou.
- Le dispositif de protection électrique comprend une béquille de réarmement, qui est montée pivotante par rapport au boîtier autour d'un axe de béquille, entre une position neutre et une position de déverrouillage,
   alors que, lorsque le déclencheur est excité par un défaut électrique, le déclencheur est configuré pour entraîner le verrou de la position de verrouillage vers la position de déverrouillage par l'intermédiaire de la béquille de réarmement, en entraînant la béquille de la position neutre à la position de déverrouillage,
   et que lorsque le contact mobile est déplacé de la position de conduction vers la position d'isolement et repousse le tiroir de sa position déclenchée vers sa position armée, le tiroir est configuré pour réarmer le déclencheur par l'intermédiaire de la béquille, en entraînant béquille de la position de déverrouillage à une position de réarmement, située au-delà de la position neutre, la position neutre étant une position intermédiaire entre la position de réarmement et la position de déverrouillage.
- Le dispositif de protection comprend aussi un deuxième chemin de conduction, qui est électriquement isolé du premier chemin de conduction et qui comprend une deuxième borne d'entrée, une deuxième borne de sortie et un deuxième contact mobile, qui est mobile par rapport au boîtier, entre :
   - une position de conduction, dans laquelle le deuxième contact mobile connecte électriquement la deuxième borne d'entrée à la deuxième borne de sortie, et
   - une position d'isolement, dans laquelle la deuxième borne d'entrée et la deuxième borne de sortie sont électriquement isolées l'une de l'autre ;
      alors que le déclencheur est un déclencheur différentiel, logé à l'intérieur du boitier et comprenant :
   - un capteur différentiel, configuré pour être excité lorsqu'un courant différentiel dépasse un seuil prédéterminé, le courant différentiel étant égal à une différence entre le courant circulant dans le premier chemin de conduction et le courant circulant dans le deuxième chemin de conduction,
   - un relais, configuré pour faire passer le mécanisme de commutation en configuration déclenchée lorsque le détecteur différentiel est excité.
- Le capteur différentiel est configuré pour générer une énergie électrique lorsque le courant différentiel est non nul, alors que le relais est un dispositif électromécanique configuré pour fonctionner uniquement avec l'énergie électrique générée par le détecteur différentiel.

L'invention concerne aussi un tableau électrique, comprenant un rail de fixation et un dispositif de protection électrique fixé sur ce rail de fixation, dans lequel le dispositif de protection électrique est tel que décrit précédemment.

L'invention sera mieux comprise, et d'autres avantages de celle-ci apparaîtront plus clairement à la lumière de la description qui va suivre, d'un mode de réalisation d'un dispositif de protection électrique et d'un tableau électrique conformes à son principe, donnée uniquement à titre d'exemple et faite en référence aux dessins annexés, dans lesquels :
[FIG 1] La figure 1 est une vue en perspective d'un tableau électrique conforme à l'invention, ce tableau électrique comprenant plusieurs dispositifs de protection électrique conformes à l'invention, tous représentés dans une configuration fermée.
[FIG 2] La figure 2 est une vue en perspective d'un dispositif de protection électrique conforme à l'invention, montré dans une configuration fermée.
[FIG 3] La figure 3 est une vue de côté du dispositif de protection électrique de la figure 2, sous un premier angle, montré dans une configuration fermée, où une partie d'un boîtier du dispositif de protection électrique est masquée.
[FIG 4] La figure 4 est une vue de côté partielle du dispositif de protection électrique des figures 2 et 3, selon le détail IV de la figure 3.
[FIG 5] La figure 5 est une vue de côté du dispositif de protection électrique des figure 2 à 4, sous un deuxième angle, montré dans une configuration fermée, où une partie du boîtier est masquée.
[FIG 6] La figure 6 est une vue de côté du dispositif de protection électrique des figure 2 à 5, sous le premier angle, montré dans une configuration ouverte, où une partie du boîtier est masquée.
[FIG 7] La figure 7 est une vue de côté du dispositif de protection électrique des figure 2 à 6, sous le deuxième angle, montré dans une configuration ouverte, où une partie du boîtier et une partie d'une chambre de coupure du dispositif sont masquées.
[FIG 8] La figure 8 est une vue de côté du dispositif de protection électrique des figures 2 à 7, sous le premier angle, montré dans une configuration fermée, où une partie du boîtier est masquée.
[FIG 9] La figure 9 est une vue de côté du dispositif de protection électrique des figures 2 à 8, sous le deuxième angle, montré dans une configuration en cours d'ouverture, où une partie du boîtier et une partie d'une chambre de coupure du dispositif sont masquées.
[FIG 10] La figure 10 est une vue en perspective partielle du dispositif de protection électrique des figures 2 à 9, montré dans une configuration fermée, où une partie du boîtier et une partie d'un mécanisme de commutation du dispositif sont masquées.
[FIG 11] La figure 11 est une vue de côté, sous le deuxième angle, d'une partie du dispositif de protection électrique des figures précédentes 2 à 10, montrée dans une configuration fermée.
[FIG 12] La figure 12 est une vue de côté, sous le deuxième angle, d'une partie du dispositif de protection électrique des figures précédentes 2 à 10, montrée dans une configuration ouverte.
[FIG 13] La figure 13 représente, sur deux inserts a) et b), deux vues en perspective selon des angles d'observation différents, d'un tiroir appartenant au dispositif de protection électrique des figures précédentes 2 à 10.

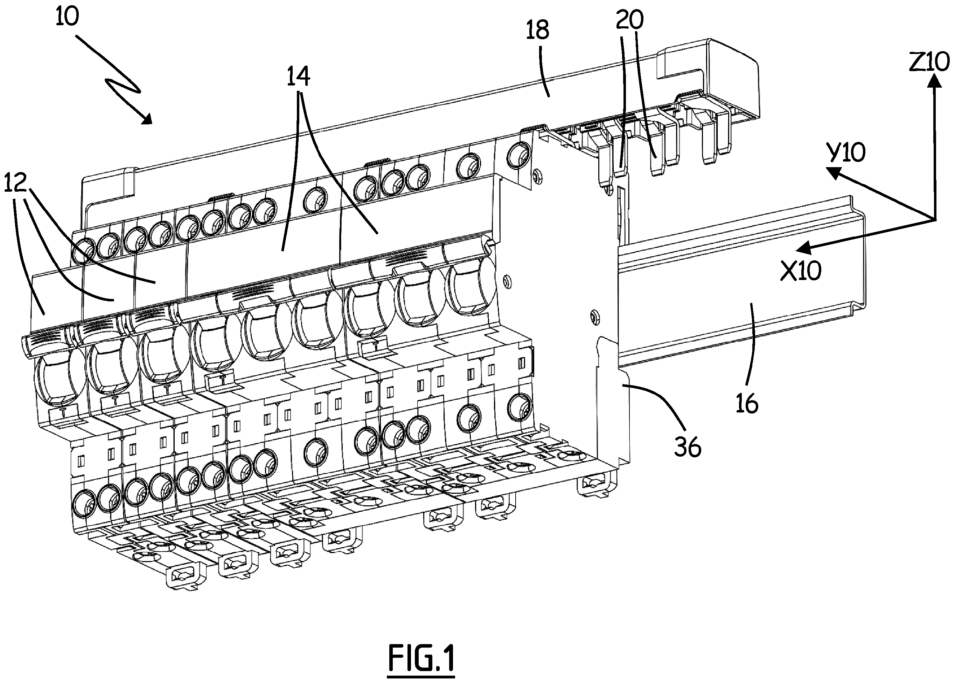

La figure 1 montre un tableau électrique 10 conforme à l'invention. Le tableau électrique 10 est configuré pour être intégré à une installation électrique, équipant par exemple un bâtiment.

Dans l'exemple, le tableau électrique 10 se présente sous la forme d'une rangée modulaire. Avantageusement, cette rangée modulaire peut être associée à d'autres rangées modulaires.

Le tableau électrique 10 accueille plusieurs dispositifs de protection électrique. Le tableau électrique 10 est modulaire, c'est-à-dire qu'il est équipé d'un nombre variable de dispositifs de protection électrique, selon les besoins de l'installation électrique à laquelle il est configuré pour être intégré, et que les dispositifs de protection électrique peuvent être de plusieurs types.

Dans l'exemple représenté à la figure 1 sont représentés des dispositifs de protection électrique 12 d'un premier type et des dispositifs de protection électrique 14 d'un deuxième type.

Le tableau électrique 10 comprend en outre un rail de fixation 16, sur lequel les dispositifs de protection électrique 12 et 14 sont installés.

Le rail de fixation 16 s'étend selon un axe de largeur X10 du tableau électrique 10. Ainsi, les dispositifs de protection électrique 12 et 14 sont juxtaposés selon l'axe de largeur X10.

On définit également un axe de profondeur Y10 et un axe de hauteur Z10 du tableau électrique 10, qui sont perpendiculaires entre eux et à l'axe de largeur X10. De préférence, lorsque le tableau électrique 10 est intégré à l'installation électrique, l'axe de hauteur Z10 est vertical et dirigée vers le haut.

Le tableau électrique 10 comprend en outre un peigne d'alimentation 18, qui s'étend selon l'axe de largeur X10, qui est relié à tous les dispositifs de protection électrique 12 et 14 et qui alimente en énergie électrique les dispositifs de protection électrique, par l'intermédiaire de connecteurs 20.

En pratique, dans le peigne d'alimentation 18, les connecteurs 20 sont répartis en plusieurs groupes, tous les connecteurs d'un même groupe étant électriquement reliés entre eux et électriquement isolés des connecteurs des autres groupes. Dans l'exemple représenté, le peigne d'alimentation 18 comprend quatre groupes de connecteurs 20.

De préférence, parmi les quatre groupes de connecteurs 20, trois groupes sont reliés chacun à une phase d'alimentation du tableau électrique 10 et un groupe est relié à un conducteur de neutre du tableau électrique.

En variante, le peigne d'alimentation 18 comprend un nombre différent de groupes de connecteurs 20, par exemple deux groupes de connecteurs, respectivement reliés à une phase d'alimentation et à un conducteur de neutre.

Le peigne d'alimentation 18 est disposé au-dessus du rail de fixation 16, selon l'axe de hauteur Z10 du tableau électrique.

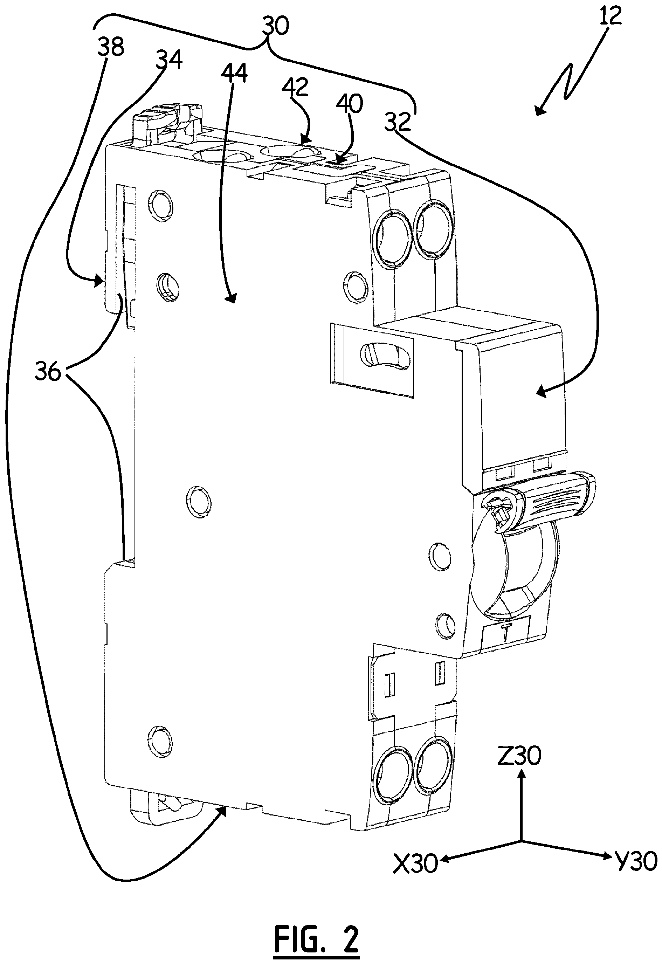

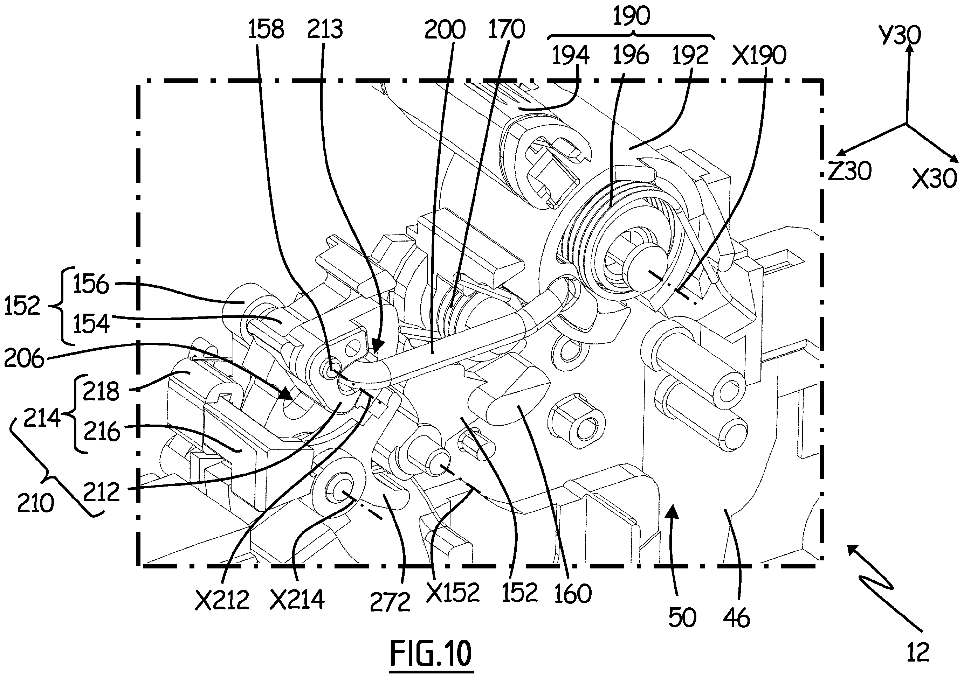

Les figures 2 à 12 montrent l'un des dispositifs de protection électrique 12.

Le dispositif 12 comprend un boîtier 30. On définit une direction de largeur X30, une direction de profondeur Y30 et une direction de hauteur Z30 du boîtier 30, qui sont perpendiculaires entre elles et fixes par rapport au boîtier 30.

Le boîtier 30 constitue une enveloppe essentiellement fermée et électriquement isolante. Le boîtier 30 comprend avantageusement une façade 32 et un dos 34, répartis suivant la direction de profondeur Y30, avec la façade 32 dans la direction Y30 par rapport au dos 34.

Pour être intégré au tableau électrique 10, le dispositif 12 est avantageusement conçu pour être fixé sur le rail de fixation 16 par l'intermédiaire du boîtier 30. Pour cela, le dispositif 12 comprend avantageusement, au dos 34, tout moyen de fixation approprié, comme par exemple une pince d'encliquetage 36, par l'intermédiaire duquel le dispositif 12 peut être fixement attaché sur le rail 16, de préférence à la main et sans outil. Lorsque le dispositif 12 est fixé sur le rail 16, la direction X30 est parallèle au rail 16 et à l'axe X10, la direction Y30 est parallèle à l'axe Y10 et la direction Z30 est parallèle à l'axe Z10.

Ainsi, en configuration montée sur le tableau électrique 10, le dos 34 du boîtier 30 du dispositif de protection électrique 12 est dirigé vers le rail 16 et la façade 32 est opposée au rail 16.

Le boîtier 30 comprend avantageusement une extrémité inférieure 38 et une extrémité supérieure 40 réparties suivant la direction Z30, avec l'extrémité supérieure 40 dans la direction Z30 par rapport à l'extrémité inférieure 38, l'extrémité supérieure 40 étant disposée au-dessus de l'extrémité inférieure 38 en configuration montée du dispositif 12 sur le tableau électrique 10.

Le boîtier 30 comprend avantageusement un flanc droit 42 et un flanc gauche 44, préférentiellement plans et parallèles entre eux, répartis suivant la direction X30, avec le flanc gauche 44 dans la direction X30 par rapport au flanc droit, le flanc gauche 44 étant disposé à gauche du flanc droit 42 en configuration montée du dispositif 12 sur le tableau électrique 10.

De préférence, la largeur du dispositif 12, mesurée selon la direction X30 entre le flanc gauche 44 et le flanc droit 42, est comprise entre 15 mm et 25 mm, de préférence encore égale à 18 mm.

La façade 32 et le dos 34, ainsi que les flancs gauche 44 et droit 42, relient l'extrémité 38 à l'extrémité 40 suivant la direction Z30. La façade 32 et le dos 34 relient chacun le flanc droit au flanc gauche, suivant la direction X30. Chaque flanc relie le dos 34 à la façade 32, suivant la direction Y30.

Lorsque deux dispositifs 12 sont juxtaposés dans le tableau électrique 10 comme montré sur la figure 1, le flanc gauche 44 d'un premier dispositif 12 est contre le flanc droit 42 d'un deuxième dispositif 12.

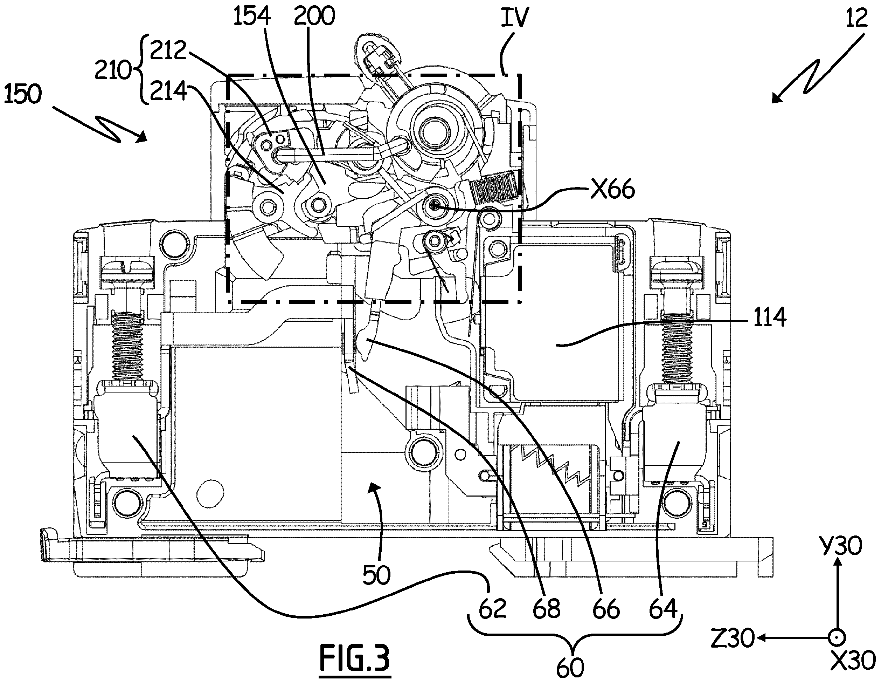

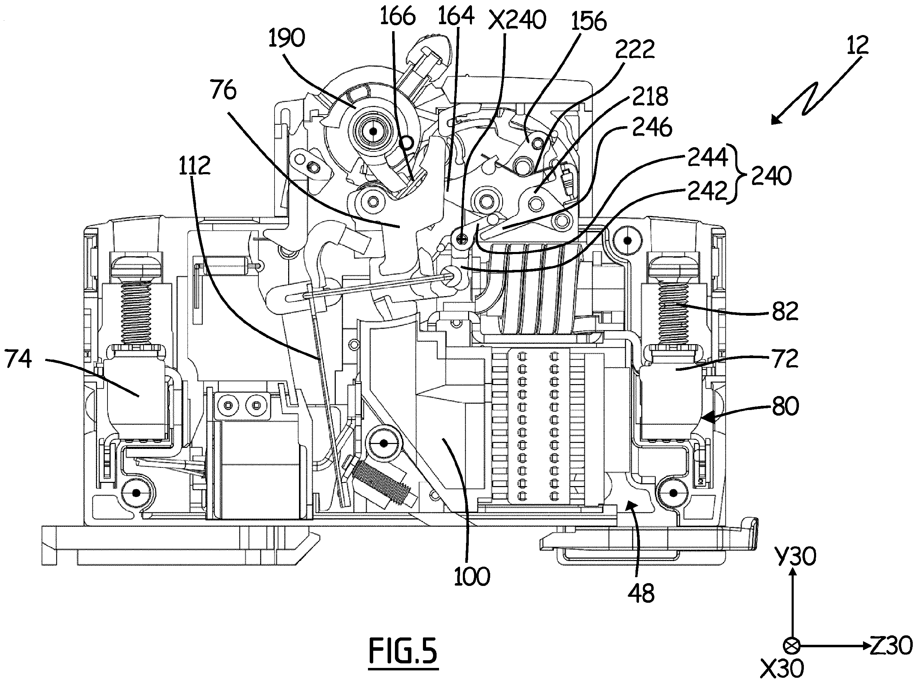

De préférence, le boîtier 30 comprend une cloison interne 46 visible sur les figures 3 à 10, qui s'étend parallèlement aux directions Y30 et Z30 et sépare un volume interne du boîtier 30 en un compartiment de droite 48, visible sur les figures 5, 7 et 9 et en un compartiment de gauche 50, visible sur les figures 3, 4, 6, 8 et 10.

Les compartiments de droite 48 et de gauche 50 sont répartis suivant la direction X30. Le compartiment de droite 48 est délimité par la cloison 46 et le flanc droit 42 suivant la direction X30, par les extrémités 38 et 40 suivant la direction Z30, et par la façade 32 et le dos 34 suivant la direction Y30. Le compartiment de gauche 50 est délimité par la cloison 46 et le flanc gauche 44 suivant la direction X30, par les extrémités 38 et 40 suivant la direction Z30, et par la façade 32 et le dos 34 suivant la direction Y30.

Le dispositif de protection électrique 12 est un dispositif bipolaire, en ce qu'il comporte deux chemins de conduction.

On prévoit que chaque chemin de conduction comporte une borne d'entrée, une borne de sortie, un contact mobile et un contact fixe.

Ainsi, un premier chemin de conduction 60 comporte une borne d'entrée 62, une borne de sortie 64, un contact mobile 66 et un contact fixe 68, visibles sur les figures 3, 6 et 8, et un deuxième chemin de conduction 70 comporte une borne d'entrée 72, une borne de sortie 74, un contact mobile 76 et un contact fixe 78, visibles sur les figures 5, 7 et 9.

De préférence, les chemins de conduction 60 et 70 sont électriquement isolés l'un de l'autre. Pour cela, de préférence, chaque chemin de conduction est essentiellement, sinon entièrement, disposé dans l'un des compartiments respectifs 48 ou 50 du boîtier 30. Ici, le premier chemin de conduction 60 est disposé dans le compartiment de gauche 50 et le deuxième chemin de conduction 70 est disposé dans le compartiment de droite 48. La cloison interne 46 est interposée entre les chemins 60 et 70, de sorte à garantir qu'ils sont électriquement isolés l'un de l'autre.

Les bornes d'entrée 62 et 72 sont disposées à l'extrémité supérieure 40 du boîtier 30, de façon à pouvoir être électriquement connectées aux connecteurs 20 du peigne d'alimentation 18 appartenant au tableau électrique 10.

Par exemple, la borne d'entrée 62 est reliée à un premier connecteur 20 appartenant à un premier groupe de connecteurs du peigne d'alimentation 18, alors que la borne d'entrée 72 est reliée à un deuxième connecteur 20 appartenant à un deuxième groupe de connecteurs du peigne d'alimentation 18.

En pratique, pour relier les bornes d'entrée 62 et 72 aux connecteurs 20, les connecteurs 20 sont enfichés dans les bornes d'entrée. Pour cela, chaque borne d'entrée 62 et 72 comprend une cavité 80, configurée pour accueillir un connecteur 20, et une vis 82, configurée pour serrer le connecteur 20 contre la borne d'entrée correspondante de sorte à établir une continuité électrique entre le connecteur 20 et la borne d'entrée correspondante.

Ainsi, le dispositif 12 est raccordé au peigne d'alimentation 18 simplement en enfichant les connecteurs 20 du peigne dans les bornes d'entrée 62 et 72 puis en serrant les vis 82.

Dans l'exemple, les bornes d'entrée 62 et 72, ainsi que les bornes de sortie 64, 74, sont des bornes à vis. En variante, les bornes d'entrée 62, 72 et/ou les bornes de sortie 64, 74 sont des bornes automatiques, également appelées bornes embrochables, ou des bornes à connecteur rapide.

Chaque chemin de conduction 60 ou 70 constitue un pôle distinct du dispositif 12. De préférence, le chemin 60 constitue un pôle de neutre, alors que le chemin 70 constitue un pôle de phase. Ainsi, le chemin 60 est relié à un conducteur de neutre du tableau électrique par l'intermédiaire d'un connecteur 20 et le chemin 70 est relié à une phase d'alimentation du tableau électrique par l'intermédiaire d'un connecteur 20. Autrement dit, chaque chemin de conduction est prévu pour être porté à un potentiel distinct. De préférence, le dispositif 12 est conçu pour être utilisé sous une basse tension, c'est-à-dire une tension comprise entre 100 V - Volts - et 600 V, par exemple une tension de 240 V.

En variante, les deux chemins de conduction sont des chemins de conduction de phase.

Les bornes de sortie 64 et 74 sont préférentiellement disposées à l'extrémité inférieure 38 du boîtier 30, de façon à pouvoir être électriquement connectées à un circuit électrique alimentant des charges réceptrices, par exemple, dans le cas d'un bâtiment, des appareils électroménagers ou de l'éclairage. Ces charges électriques sont alors alimentées avec l'énergie électrique fournie aux bornes d'entrée 62 et 72 par les connecteurs 20 du peigne d'alimentation 18, au travers du dispositif 12.

En variante, la borne d'entrée 62 du chemin de conduction relié à un conducteur de neutre du tableau électrique est disposée à l'extrémité inférieure 38 du boîtier 30, c'est-à-dire à proximité des bornes de sortie 64 et 74, et le chemin de conduction 60 forme une boucle dans le boîtier. Ainsi, dans cette variante, trois bornes sont disposées à l'extrémité inférieure 38 du boîtier et seule la borne d'entrée 72 est disposée à l'extrémité supérieure 40 du boîtier. Avantageusement, dans une telle variante, l'une des trois bornes est remplacée par une pince d'embrochage, ou par un fil électrique s'étendant hors du boîtier 30.

Le contact fixe 68 est ici fixe par rapport au boîtier 30, et est électriquement connecté à la borne d'entrée 62. Le contact mobile 66 est ici électriquement connecté à la borne de sortie 64. Le contact fixe 68 est disposé dans la direction Z30 par rapport au contact mobile 66.

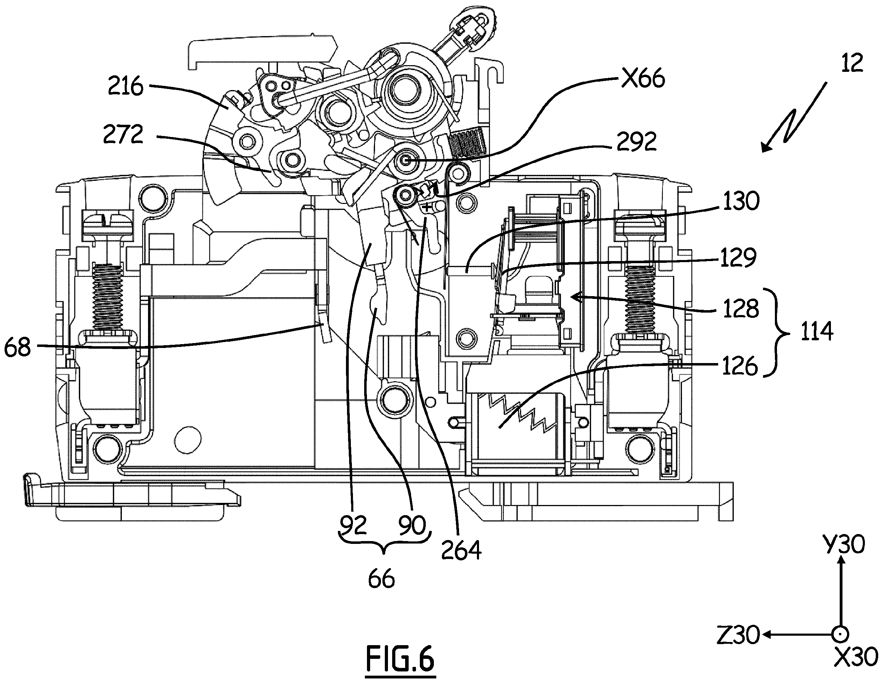

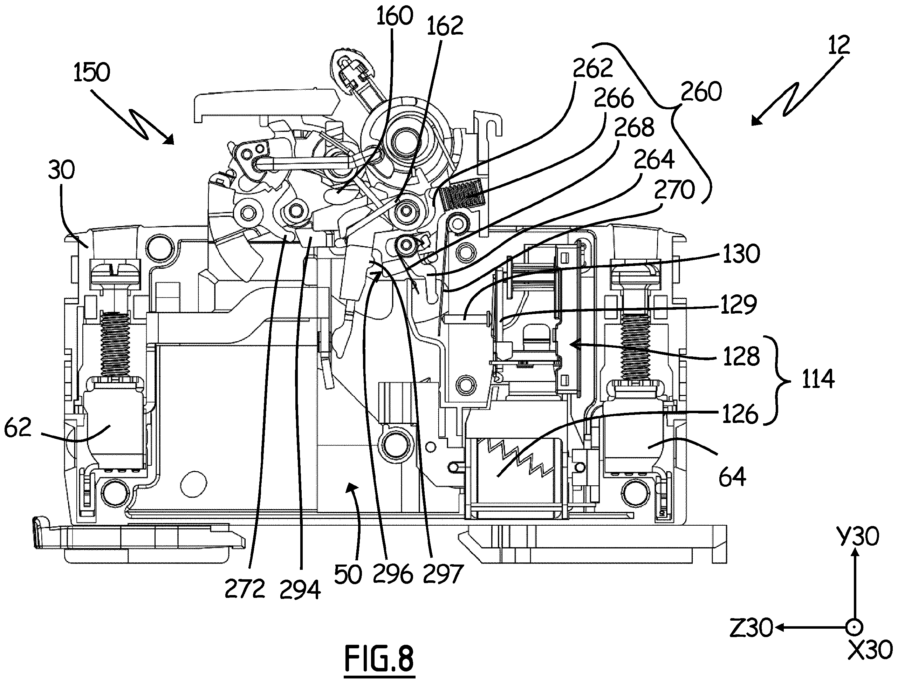

Comme visible sur les figures 3, 6 et 8, le contact mobile 66 comprend préférentiellement une extrémité conductrice 90, assurant la fonction de contact électrique, et qui est électriquement connectée à la borne de sortie 64. Le contact mobile 66 comprend aussi un porte-contact 92, qui porte l'extrémité 90. Le contact mobile 66 est pivotant, par rapport au boîtier 30, par l'intermédiaire du porte-contact 92, autour d'un axe de contact mobile X66, parallèle à la direction X30. Ce pivotement est effectué entre une position de conduction, montrée sur les figures 3 et 8, et une position d'isolement, montrée sur la figure 6.

En position de conduction du contact mobile 66, l'extrémité conductrice 90 est en en contact électrique avec le contact fixe 68, ce qui connecte électriquement la borne d'entrée 62 à la borne de sortie 64. En position d'isolement, l'extrémité 90 du contact mobile 66 est écarté du contact fixe 68, de sorte à en être électriquement isolé, ce qui rompt la connexion électrique entre les bornes 62 et 64, de sorte que les bornes 62 et 64 sont électriquement isolées l'une de l'autre.

Le contact fixe 78 est fixe par rapport au boîtier 30, et est électriquement connecté à la borne d'entrée 72. Le contact mobile 76 est électriquement connecté à la borne de sortie 74. Le contact fixe 78 est disposé dans la direction Z30 par rapport au contact mobile 76.

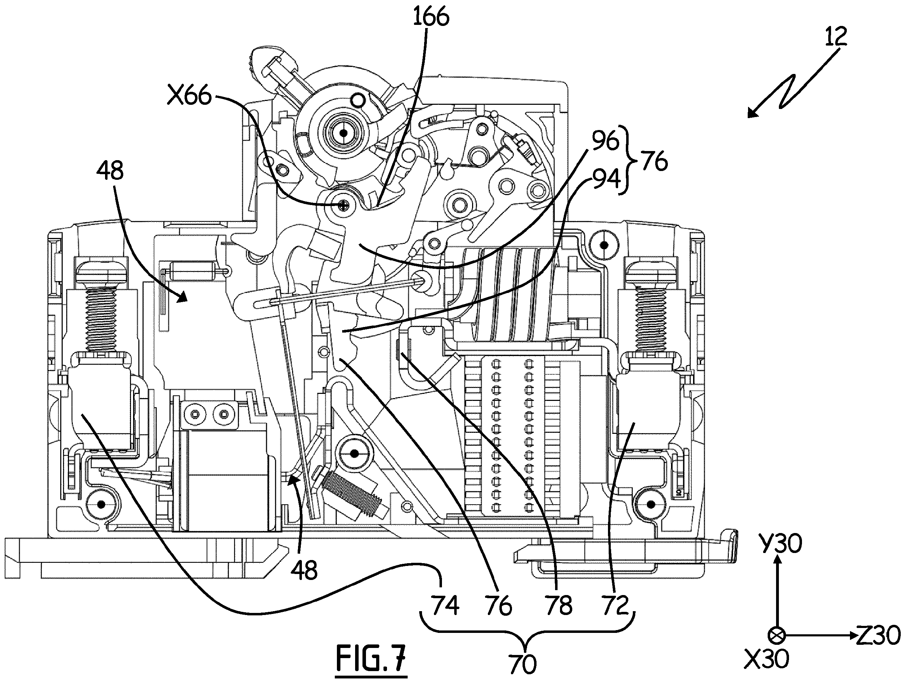

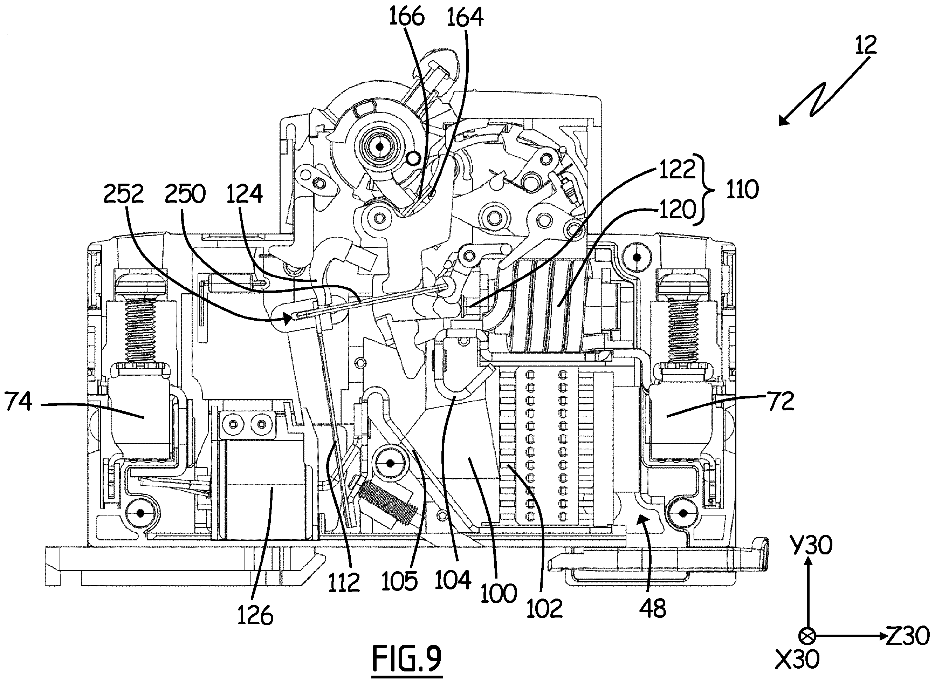

Comme visible sur les figures 7 et 9, le contact mobile 76 comprend préférentiellement une extrémité conductrice 94, assurant la fonction de contact électrique, et qui est électriquement connectée à la borne de sortie 74. Le contact mobile 76 comprend aussi un porte-contact 96, qui porte l'extrémité 94. Le contact mobile 76 est pivotant, par rapport au boîtier 30, par l'intermédiaire du porte-contact 96, autour d'un axe de contact mobile. Dans l'exemple, les axes de contact mobile respectifs des contacts mobiles 66 et 76 sont confondus, c'est-à-dire que le contact mobile 76 est pivotant autour du même axe que le contact mobile 66, autrement dit autour de l'axe X66.

En variante, les axes de contact mobile des contacts 66 et 76 sont parallèles entre eux, non-confondus, et tous deux parallèles à la direction X30.

Le pivotement du contact 76 est effectué entre une position de conduction, montrée sur la figure 5, et une position d'isolement, montrée sur la figure 7.

Les contacts mobiles 66 et 76 sont avantageusement pivotants par rapport au boîtier de façon indépendante. Lorsqu'ils évoluent de leur position de conduction respective à leur position d'isolement respective, les contacts mobiles 66 et 76 tournent avantageusement dans le même sens autour de leur axe de contact mobile respectif, dans l'exemple autour de l'axe X66. En particulier, les extrémités de contact 90 et 94 sont alors déplacées à l'opposé de la direction Z30, c'est-à-dire vers les bornes de sortie 64 et 74, soit vers l'extrémité inférieure 38 du boîtier 30.

En position de conduction du contact mobile 76, l'extrémité conductrice 94 est en en contact électrique avec le contact fixe 78, ce qui connecte électriquement la borne d'entrée 72 à la borne de sortie 74. En position d'isolement, l'extrémité 94 du contact mobile 76 est écarté du contact fixe 78, de sorte à en être électriquement isolé, ce qui rompt la connexion électrique entre les bornes 72 et 74, de sorte que les bornes 72 et 74 sont électriquement isolées l'une de l'autre.

À la figure 9, le contact mobile 76 est montré dans une position intermédiaire entre les positions de conduction et d'isolement, c'est-à-dire que l'extrémité conductrice 94 est éloignée du contact fixe 78 mais le contact mobile 76 n'est pas en position d'isolement. Cette position intermédiaire s'obtient au cours du basculement du contact mobile 76 depuis sa position de conduction vers sa position d'isolement.

Le dispositif de protection électrique 12 comprend une chambre de coupure 100, qui est représentée complète sur la figure 5, et ouverte partiellement sur les figures 7 et 9, pour en révéler le contenu.

La chambre de coupure 100 vise à conférer un pouvoir de coupure au dispositif 12, en dissipant tout arc électrique qui pourrait se produire lorsque le contact mobile 76 passe de la position de conduction à la position d'isolement, c'est-à-dire lorsqu'il s'éloigne du contact fixe 78.

En pratique, lorsque le contact mobile 76 passe de la position de conduction à la position d'isolement, son extrémité conductrice 94 est située dans la chambre de coupure 100.

La chambre de coupure 100 est avantageusement disposée dans le compartiment de droite 48, entre le contact fixe 78 et la borne d'entrée 72, le long du dos 34 du boîtier 30. La chambre de coupure 100 comporte par exemple un empilement de plaques métalliques 102, parfois appelées ailettes ou séparateurs superposées à distance l'une de l'autre, ici suivant la direction Y30, pour allonger et ainsi éteindre l'arc électrique éventuel. La chambre de coupure 100 comprend avantageusement des joues isolantes, non-représentées, entre lesquelles les plaques 102 sont disposées.

Les plaques 102 sont par exemple maintenues entre la cloison interne 46 et le flanc droit 42 du boîtier 30. La borne d'entrée 72 est interposée entre la chambre de coupure 100 et l'extrémité supérieure 40 du boîtier.

Le contact fixe 78 est préférentiellement prolongé par une corne d'arc 104, recourbée en direction de l'empilement de plaques métalliques 102 de la chambre de coupure 100.

La chambre de coupure comprend avantageusement une corne d'arc 105, qui est électriquement connectée au chemin de conduction 70, entre le contact mobile 76 et la borne de sortie 74. La corne d'arc 105 est disposée en regard de la corne d'arc 104.

Ainsi, lorsque le contact mobile 76 est basculé en position d'isolement, l'arc électrique éventuel est conduit jusqu'aux plaques métalliques 102 par l'intermédiaire des cornes d'arc 104 et 105, pour être divisé et éteint au sein de la chambre de coupure 100.

Le dispositif de protection électrique 12 comprend en outre au moins un déclencheur. Dans l'exemple illustré, le dispositif de protection comprend trois déclencheurs 110, 112 et 114, configurés pour être excités chacun par un défaut électrique d'un type prédéterminé distinct et pour basculer les contacts mobiles 66 et 76 en position d'isolement lorsqu'ils sont excités.

Le déclencheur 110, visible sur les figures 5, 7 et 9, est configuré pour être excité par un défaut électrique de type court-circuit qui est, par exemple, susceptible de se produire entre les chemins de conduction 60 et 70 ou entre le chemin de conduction 70 et la terre. Le déclencheur 110 est donc notamment excité par un court-circuit qui se produirait en aval des bornes de sortie 64 et 74, sur le circuit électrique alimenté au travers du dispositif 12, ou sur l'une de ses charges. En l'occurrence, il s'agit d'un court-circuit phase-neutre, ou phase-terre.

Ici, le déclencheur 110 est disposé dans le compartiment de droite 48, et connecté en série sur le chemin de conduction 70. Suivant la direction Z30, le déclencheur 110 est disposé entre la borne d'entrée 72 et le contact fixe 78. Suivant la direction Y30, le déclencheur 110 est disposé entre la chambre de coupure 100 et la façade 32 du boîtier 30. Suivant la direction X30, le déclencheur 110 est disposé entre le flanc droit 42 du boîtier et la cloison interne 46 du boîtier.

Le déclencheur 110 est parfois appelé déclencheur magnétique. En particulier, le déclencheur 110 se présente sous la forme d'un actionneur magnétique, qui comprend ici un enroulement électromagnétique 120 et un noyau mobile 122. Le noyau 122 est visible seulement sur la figure 9. La borne d'entrée 72 est connectée électriquement au contact fixe 78 par l'intermédiaire du déclencheur 110, en particulier de l'enroulement électromagnétique 120. Lorsqu'un court-circuit se produit entre les chemins de conduction 60 et 70, notamment en aval des bornes de sortie 64 et 74, l'intensité du courant circulant dans l'enroulement 120 devient brutalement très élevée, de sorte à générer un effort électromagnétique suffisant pour déplacer le noyau mobile 122 depuis une position de repos, montrée sur les figures 5 et 7, jusqu'à une position déclenchée, montrée sur la figure 9, par rapport au boîtier 30. Ici, le déplacement du noyau 122 de la position de repos à la position déclenchée est effectuée dans une direction opposée à la direction Z30, c'est-à-dire vers l'extrémité inférieure 38 du boîtier. Une fois que le défaut cesse, L'intensité circulant dans l'enroulement 120 n'est plus suffisamment élevée pour maintenir le noyau 122 en position déclenchée, de sorte que le noyau 122 est avantageusement ramené dans la position de repos, par exemple par un ressort appartenant au déclencheur 110, non représenté.

Lorsque le noyau 122 est déplacé en position déclenchée, il entraîne la rotation des contacts mobiles 66 et 76 depuis leur position de conduction vers leur position d'isolement, interrompant ainsi la circulation d'un courant électrique entre les bornes d'entrée 62 et 72 et les bornes de sortie 64 et 74.

Sur les figures 8 et 9, le dispositif de protection électrique 12 est montré dans une configuration où le déclencheur 110 est en cours de déclenchement, c'est-à-dire lorsque le noyau 122 est en position déclenchée. Sur ces figures, le contact mobile 76 n'est plus en position de conduction et n'a pas encore atteint la position d'isolement illustrée à la figure 7 et le contact mobile 66 n'a pas encore quitté sa position de conduction.

Le déclencheur 112, visible sur les figures 5, 7 et 9, est configuré pour être excité par un défaut électrique d'un autre type prédéterminé, à savoir un défaut électrique de type surcharge, qui est, par exemple, susceptible de se produire entre les chemins de conduction 60 et 70. Le déclencheur 112 est donc notamment excité par une surcharge qui se produirait en aval des bornes de sortie 64 et 74, sur le circuit électrique alimenté au travers du dispositif 12, ou sur l'une de ses charges. Ce type de défaut peut se produire lorsqu'une ou plusieurs charges connectées à ce circuit électrique imposent une demande de courant trop importante.

Ici, le déclencheur 112 est disposé dans le compartiment de droite 48, et connecté en série sur le chemin de conduction 70. Suivant la direction Z30, le déclencheur 112 est disposé entre la borne de sortie 74 et le contact mobile 76. Suivant la direction Y30, le déclencheur 112 est disposé entre le dos 34 et la façade 32 du boîtier 30. Suivant la direction X30, le déclencheur 112 est disposé entre le flanc droit 42 du boîtier et la cloison interne 46 du boîtier.

Le déclencheur 112 est parfois appelé déclencheur thermique. En particulier, le déclencheur 112 se présente sous la forme d'un actionneur thermique, qui est ici formé par un bilame électriquement conducteur et thermo-déformable. Lorsque le bilame est traversé par un courant électrique, le bilame s'échauffe par effet Joule et se déforme. Le contact mobile 76 est connecté électriquement à la borne de sortie 74 par l'intermédiaire du déclencheur 112, c'est-à-dire ici via le bilame. De préférence, une tresse souple 124 relie électriquement le contact mobile 76 au déclencheur 112. Lorsqu'une surcharge se produit, notamment en aval des bornes de sortie 64 et 74, l'intensité du courant circulant dans le bilame formant le déclencheur 112 élève la température du bilame jusqu'à causer sa déformation. Une fois que le défaut cesse, le bilame refroidit et reprend sa forme initiale. Le bilame est donc mobile entre une configuration initiale et une configuration déformée.

Lorsque le bilame est en configuration déformée, il entraîne la rotation des contacts mobiles 66 et 76 depuis leur position de conduction vers leur position d'isolement, interrompant ainsi la circulation d'un courant électrique entre les bornes d'entrée 62 et 72 et les bornes de sortie 64 et 74.

Le déclencheur 114 est configuré pour être excité par un défaut électrique d'un autre type prédéterminé, à savoir un défaut électrique de type différentiel, qui est susceptible de se produire entre le chemin de conduction 70 et la terre. Le déclencheur 114 est donc notamment excité par une fuite de courant vers la terre, qui se produirait en aval des bornes de sortie 64 et 74, causant alors une différence entre la valeur de l'intensité du courant circulant au sein du chemin de conduction 70 et la valeur de l'intensité du courant circulant en sens inverse au sein du chemin de conduction 60. Autrement dit, le capteur différentiel 126 détecte un courant différentiel, qui est égal à une différence entre le courant circulant dans le premier chemin de conduction 60 et le courant circulant dans le deuxième chemin de conduction 70.

Ici, le déclencheur 114 s'étend à la fois dans les compartiments 48 et 50, en traversant la cloison interne 46. Suivant la direction Z30, le déclencheur 114 est avantageusement disposé entre d'une part, les bornes de sortie 64 et 74, et d'autre part, les contacts fixes 68 et 78 et les contacts mobiles 66 et 76.

Le déclencheur 114 est parfois appelé déclencheur différentiel. De préférence, le déclencheur 114 comprend un capteur différentiel 126, qui s'étend à la fois dans les compartiments 48 et 50, en étant disposé le long du dos 34 du boîtier 30. Comme visible sur les figures 3, 6 et 8, de préférence, le déclencheur 114 comprend aussi un relais 128, qui s'étend seulement dans le compartiment de gauche 50, en étant disposé entre la façade 32 et le capteur différentiel 126. Sur les figures 6 et 8, le relais 128 est représenté ouvert pour en révéler le contenu, selon un exemple. Le relais 128 comprend ici une plaquette 129, qui repousse une tige mobile 130 lorsque le relais 128 est actionné par le capteur différentiel 126.

Le capteur différentiel 126 comprend par exemple un tore ferromagnétique, portant deux enroulements électromagnétiques, l'un formé par le chemin de conduction 60 et l'autre formé par le chemin de conduction 70. L'enroulement électromagnétique du chemin de conduction 60 est avantageusement formé par une partie du chemin 60 entre le contact mobile 66 et la borne de sortie 64. L'enroulement électromagnétique du chemin 70 est avantageusement formé par une partie du chemin 70 qui relie le contact mobile 76 à la borne de sortie 74, plus précisément par une partie du chemin 70 entre le déclencheur 112 et la borne de sortie 74.

Par exemple, le contact mobile 66 et l'enroulement du capteur différentiel 126 du chemin de conduction 60 sont électriquement reliés à l'aide d'une tresse, non représentée. Lorsqu'une différence d'intensité est établie entre les chemins 60 et 70, au-delà d'un certain seuil, un champ électromagnétique est généré au niveau du tore du capteur différentiel 126. Autrement dit le capteur différentiel 126 est configuré pour générer une énergie électrique lorsque le courant différentiel est non nul.

Le relais 128 est configuré pour être actionné lorsque cette énergie électrique dépasse un certain seuil, ce qui a pour effet de libérer la plaquette 129 et d'actionner le déplacement de la tige mobile 130 appartenant au relais 128, depuis une position de repos, montrée sur les figures 3 et 8, jusqu'à une position de déclenchement, non-visible sur les figures, par rapport au boîtier 30. Ici, le déplacement de la tige mobile 130 de la position de repos à la position déclenchée est effectuée suivant la direction Z30, c'est-à-dire vers l'extrémité supérieure 40 du boîtier 30.

Sur la figure 6, la tige mobile 130 est représentée en position de réarmement, dans laquelle la tige 130 est repoussée au-delà de la position de repos, la tige 130 repoussant la plaquette 129 de manière à réarmer le relais 128, qui peut à nouveau déplacer la tige 130 depuis sa position de repos vers sa position de déclenchement dès qu'un courant différentiel suffisamment grand survient.

Une fois que la tige mobile 130 a atteint la position déclenchée, il convient de la ramener jusqu'à la position de repos pour réarmer le relais 128 et ainsi permettre à nouveau au relais 128 d'actionner la tige 130 en cas de défaut différentiel, comme expliqué ci-après.

Lorsque la tige mobile 130 est déplacé de sa position de repos vers sa position déclenchée, elle entraîne la rotation des contacts mobiles 66 et 76 depuis leur position de conduction vers leur position d'isolement, interrompant ainsi la circulation d'un courant électrique entre les bornes d'entrée 62 et 72 et les bornes de sortie 64 et 74.

Le dispositif de protection électrique 12 comprend également un mécanisme de commutation 150.

Le mécanisme de commutation 150 est logé dans le boîtier 30, en partie dans le compartiment 48 et dans le compartiment 50. Le mécanisme de commutation 150 est configuré pour basculer entre une configuration armée, montrée sur les figures 3 à 5 et 10, dans laquelle le mécanisme 150 met les deux contacts mobiles 66 et 76 en position de conduction, et une configuration déclenchée, montrée sur les figures 6 et 7, dans laquelle le mécanisme de commutation 150 met les contacts mobiles 66 et 76 en position d'isolement.

Dans le présent exemple, le mécanisme de commutation 150 comprend un étrier 152, visible sur les figures 3 à 10. L'étrier 152 est pivotant par rapport au boîtier 30 autour d'un axe d'étrier X152, parallèle à l'axe de contact mobile X66. L'étrier 152 s'étend à la fois dans les compartiments 48 et 50, en étant porté par la cloison interne 46, à cheval sur celle-ci.

Lorsque le mécanisme 150 est en configuration armée, l'étrier 152 est dans une première orientation dite « position armée » par rapport au boîtier 30, autour de l'axe X152. Lorsque le mécanisme 150 est en configuration déclenchée, l'étrier 152 est dans une deuxième orientation dite « position déclenchée », autour de l'axe X152. Le mécanisme 150 actionne les contacts mobile 66 et 76 par l'intermédiaire de l'étrier 152.

En pratique, l'étrier 152 comprend ici une platine 154, disposée dans le compartiment de gauche 50, et une contre-platine 156, disposée dans le compartiment de droite 48. Ainsi, la platine 154 et la contre-platine 156 sont disposées de part et d'autre de la cloison interne 46 et sont chacune pivotantes autour de l'axe d'étrier X152. De plus, la platine 154 et la contre-platine 156 sont fixement reliées par un arbre de liaison 158, de sorte que tout mouvement de rotation de la platine 154 autour de l'axe d'étrier X152 entraîne un mouvement de rotation identique de la contre-platine 156 autour de l'axe d'étrier X152, et inversement. Par extension, l'axe d'étrier X152 est aussi un axe de platine 154, autour duquel la platine 154 pivote. La platine 154 est dite en position ouverte, respectivement position fermée, lorsque l'étrier 152 est en position armée, respectivement position déclenchée.

Comme montré sur les figures 3, 4, 6, 8 et 10, la platine 154 de l'étrier 152 comprend par exemple une came 160, disposé dans le compartiment de gauche 50, par l'intermédiaire duquel l'étrier 152 entraîne le contact mobile 66 du premier chemin de conduction 60 depuis la position de conduction jusqu'à la position d'isolement, lorsque l'étrier 152 est pivoté de la position armée jusqu'à la position déclenchée. Pour entraîner le contact mobile 66 en rotation dans ce sens, la came 160 vient en appui contre le porte-contact 92 du contact mobile 66. Autrement dit, la platine 154 est configurée pour, lorsque la platine 154 passe de sa position fermée à sa position ouverte, déplacer le premier contact 66 de sa position de conduction vers sa position d'isolement.

Le mécanisme de commutation 150 comprend avantageusement un ressort 162, dit « ressort de contact », qui est disposé dans le compartiment de gauche 50 en étant en appui à la fois sur la platine 154 de l'étrier 152 et sur le contact mobile 66, plus précisément sur le porte-contact 92. Ainsi, lorsque l'étrier 152 est pivoté depuis la position déclenchée jusqu'à la position armée, l'étrier 152 entraîne le contact 66 de la position d'isolement jusqu'à la position de conduction par l'intermédiaire du ressort 162.

On prévoit que le ressort 162 applique un effort sur le contact 66, en prenant appui sur la platine 154, de préférence sur la came 160, qui tend à mettre en appui le contact mobile 66 contre le contact fixe 68, lorsque l'étrier 152 est en position armée. Cet effort permet d'assurer une pression de contact satisfaisante entre le contact mobile 66 et le contact fixe 68.

Comme montré sur les figures 5, 7 et 9, la contre-platine 156 de l'étrier 152 comprend par exemple une came 164, disposé dans le compartiment de droite 48, par l'intermédiaire duquel l'étrier 152 entraîne le contact mobile 76 du deuxième chemin de conduction 70 depuis la position de conduction jusqu'à la position d'isolement, lorsque l'étrier 152 est pivoté de la position armée jusqu'à la position déclenchée. Pour entraîner le contact mobile 76 en rotation dans ce sens, la came 164 vient en appui contre le porte-contact 96 du contact mobile 76.

Le mécanisme de commutation 150 comprend avantageusement un ressort 166, dit « ressort de contact », qui est disposé dans le compartiment de droite 48 en étant en appui à la fois sur la contre-platine 156 de l'étrier 152 et sur le contact mobile 76, plus précisément sur le porte-contact 96. Ainsi, lorsque l'étrier 152 est pivoté depuis la position déclenchée jusqu'à la position armée, l'étrier 152 entraîne le contact 76 de la position d'isolement jusqu'à la position de conduction par l'intermédiaire du ressort 166.

On prévoit que le ressort de contact 166 applique un effort sur le contact 76, en prenant appui sur la contre-platine 156, de préférence sur la came 164, qui tend à mettre en appui le contact mobile 76 contre le contact fixe 78, lorsque l'étrier 152 est en position armée. Cet effort permet d'assurer une pression de contact satisfaisante entre le contact mobile 76 et le contact fixe 78.

Par exemple, les ressorts de contact 162 et 166 sont des ressorts hélicoïdaux de torsion, montés respectivement sur le contact mobile 66 et sur le contact mobile 76 et dont une première branche prend respectivement appui sur le contact mobile 66 et sur le contact mobile 76 et dont une deuxième branche prend respectivement appui sur la came 160 et sur la came 164.

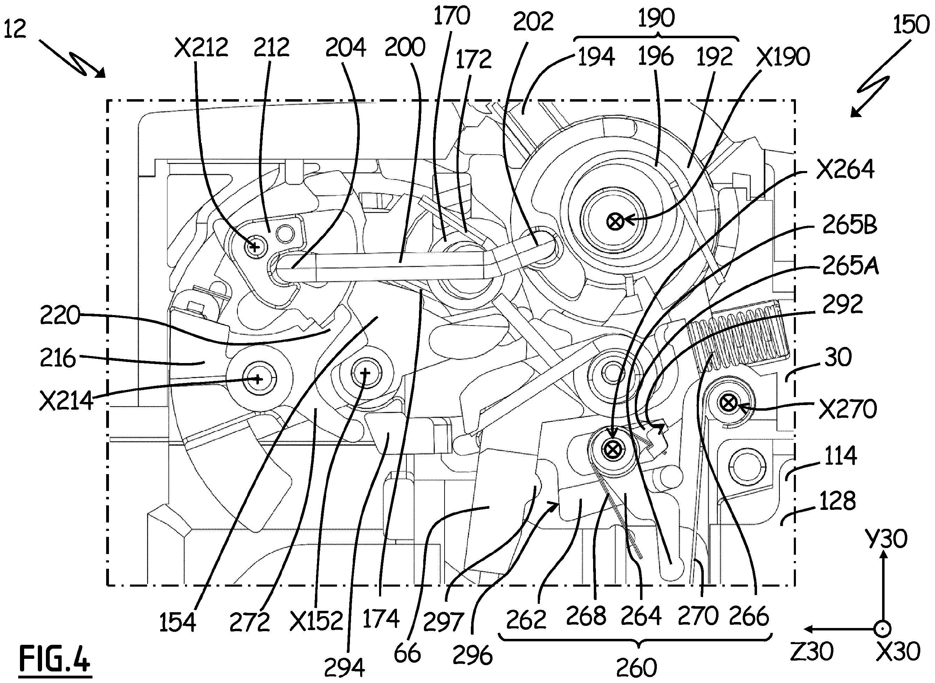

On comprend que les cames 160 et 164 et que les ressorts de contact 162 et 166 transmettent un mouvement de rotation de l'étrier 152 en un mouvement de rotation des contacts mobiles 66 et 76, et que le sens de rotation des contacts mobiles 66 et 76 est opposé au sens de rotation de l'étrier 152. Par exemple, lorsque l'étrier bascule de la position armée à la position déclenchée, il tourne dans le sens horaire, sous l'angle des figures 3 et 4, et entraîne en rotation les contacts mobiles 66 et 76 dans le sens antihoraire, sous l'angle des figures 3 et 4.

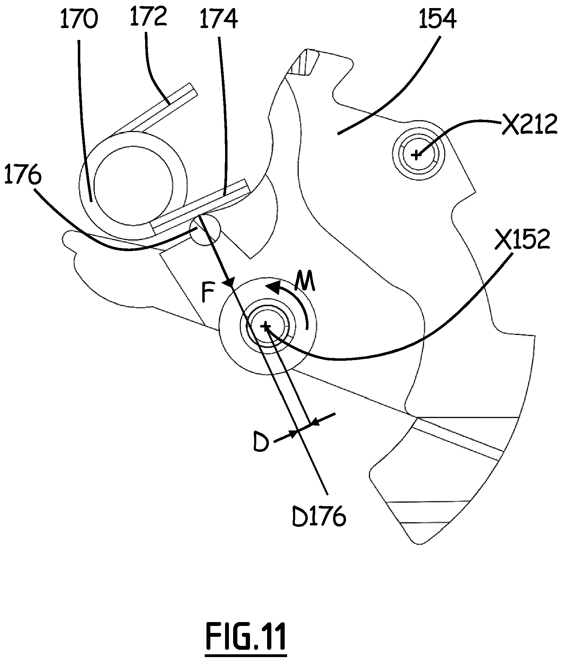

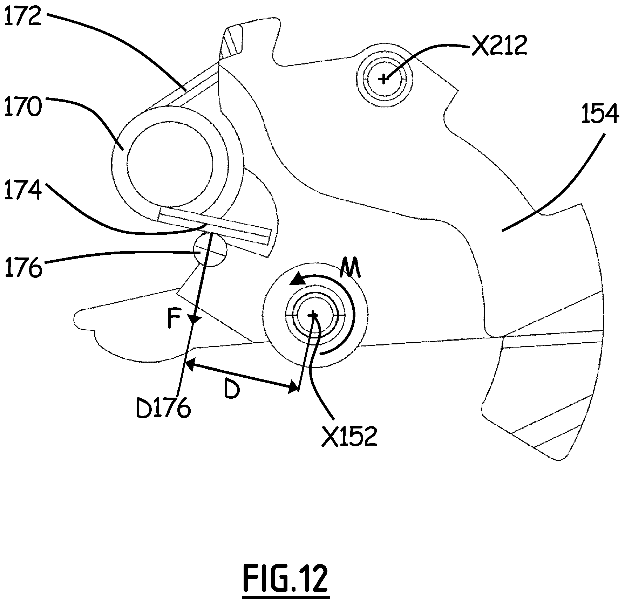

Le mécanisme de commutation 150 comprend en outre un ressort 170, dit « ressort d'étrier », visible sur les figures 3, 4, 6, 8, 10, 11 et 12 et montré seul avec la platine 154 aux figures 11 et 12. Le ressort d'étrier 170 est ici disposé dans le compartiment de gauche 50 du boîtier 30.

Le ressort d'étrier 170 applique un effort sur la platine 154 de l'étrier 152, en prenant appui sur le boîtier 30, qui tend à déplacer l'étrier 152 de la position armée vers la position déclenchée.

Dans l'exemple représenté, le ressort d'étrier 170 est un ressort hélicoïdal de torsion, monté sur la cloison interne 46, dont une première branche de sortie 172 prend appui contre le boîtier 30 et dont une deuxième branche de sortie 174 prend appui contre une butée 176 appartenant à la platine 154.

Ainsi, la première branche 172 exerce un effort F sur le boîtier 30 et la deuxième branche 174 exerce un effort sur la butée 176 de la platine 154.

L'effort F exercé par le ressort d'étrier 170 sur la butée 176 génère sur la platine 154 un moment M, qui entraîne la rotation de la platine 154 autour de l'axe d'étrier X152 par un phénomène de bras de levier.

En pratique, l'effort F exercé par la deuxième branche 174 sur la butée 176 est dirigé selon une droite, notée D176, qui est perpendiculaire à la surface de contact entre la deuxième branche et la butée et qui est située dans un plan perpendiculaire à la direction X152.

En outre, la position de la surface de contact évolue dans ce plan, au cours de la rotation de l'étrier de la position armée vers la position déclenchée, de sorte que l'orientation de la droite D176 évolue au cours de la rotation de l'étrier.

L'intensité du moment M généré par le ressort d'étrier 170 sur la platine 154 dépend, d'une part, de l'intensité de l'effort F exercé par la deuxième branche 174 sur la butée 176 et, d'autre part, de la distance entre l'axe d'étrier X152 et la droite D176, notée D et mesurée selon un axe perpendiculaire à la droite D176 et passant par l'axe d'étrier X152. En effet, plus cette distance D est importante, plus le bras de levier générant le moment M à partir de la force F est important, car le moment M est égal au produit de la force F par la distance D.

L'étrier 152 est configuré pour que, lorsque l'étrier 152 est en position armée, la distance D présente une valeur minimale sans toutefois être nulle, c'est-à-dire que l'intensité du moment M présente une valeur minimale sans être nulle, tandis que lorsque l'étrier 152 est pivoté depuis la position armée vers la position déclenchée, la distance D augmente, c'est-à-dire que l'intensité du moment M augmente.

Lorsque l'étrier 152 est pivoté depuis la position armée vers la position déclenchée, la diminution de l'intensité de l'effort F lorsque le ressort d'étrier 170 se détend est proportionnellement inférieure par rapport à l'augmentation de la distance D, qui est relativement importante. Il en résulte que l'intensité du moment M augmente.

L'augmentation du moment M entraînant le pivotement de l'étrier 152 est avantageuse, car elle permet d'augmenter la vitesse de basculement des contacts mobiles 66 et 76 entre leur position de conduction et leur position d'isolement.

Le dispositif de protection électrique 12 comprend également une manette de commutation 190.

La manette de commutation 190 est pivotante, par rapport au boîtier 30, autour d'un axe de manette X190, parallèle à l'axe X30, entre une position de fermeture, montrée sur les figures 3 à 5 et 8 à 10, et une position d'ouverture, montrée sur les figures 6 et 7.

La manette de commutation 190 comprend ici une base 192, par l'intermédiaire de laquelle la manette est attachée au boîtier 30 de façon pivotante. La base 192 est agencée au travers d'une ouverture appartenant à la façade 32, en obturant cette ouverture. Ainsi, la manette de commutation 190 est portée par la façade 32. Dans le sens de l'axe X190, la base 192 s'étend avantageusement de part et d'autre de la cloison interne 46. Autrement dit, la manette 190 est avantageusement centrée, suivant la direction X30, sur la façade 32. La manette de commutation 190 comporte un maneton 194, porté par la base 192, et par l'intermédiaire duquel un utilisateur peut actionner la manette 190 en rotation. Pour être accessible par l'utilisateur, le maneton 194 est disposé à l'extérieur du boîtier 30.

Le mécanisme de commutation 150 comprend avantageusement un ressort 196, dit « ressort de manette », visible sur les figures 3, 4, 6, 8 et 10. Le ressort de manette 196 applique un effort sur la manette 190 en prenant appui sur le boîtier 30, qui tend à ramener la manette de la position de fermeture vers la position d'ouverture. Par exemple, le ressort de manette 196 est un ressort hélicoïdal de torsion, logé à l'intérieur de la base 192 autour de l'axe de manette X190, et dont une branche prend appui sur la manette 190 et une autre branche prend appui sur la cloison interne 46.

Le mécanisme de commutation 150 comprend avantageusement une bielle 200, visible sur les figures 3, 4, 6, 8 et 10. La bielle 200 est par exemple disposée dans le compartiment de gauche 50. La bielle 200 comprend une première extrémité 202 attachée à la manette 190, en particulier à la base 192. Par l'intermédiaire de cette première extrémité 202, la bielle 200 peut pivoter par rapport à la manette 190, autour d'un axe qui est parallèle et non confondu avec l'axe de manette X190. Ainsi, la rotation de la manette 190 est liée à un mouvement de manivelle de la première extrémité 202 de la bielle 200.

En pratique, au cours de la rotation de la manette 190, la première extrémité 202 de la bielle 200 décrit un arc de cercle centré sur l'axe de manette X190.

La bielle 200 comprend une deuxième extrémité 204, opposée à la première extrémité 202, qui interagit notamment avec l'étrier 152, comme décrit ci-après.

La deuxième extrémité 204 est guidée dans une gorge 206 ménagée dans la platine 154, c'est-à-dire dans un plan parallèle aux directions Y30 et Z30.

Le mécanisme de commutation 150 comprend avantageusement un loquet de verrouillage 210, visible sur les figures 3, 4, 6, 8 et 10. Au moins une partie du loquet de verrouillage 210 est disposée dans le même compartiment que celui de la bielle 200, pour coopérer avec cette dernière, ici le compartiment de gauche 50.

Au moins une partie du loquet de verrouillage 210 s'étend dans le ou les compartiments où sont logés les déclencheurs 110, 112 et 114, pour coopérer mécaniquement avec ces derniers, ici les compartiments 48 et 50. Le loquet 210 est avantageusement porté par l'étrier 152. Le loquet 210 évolue entre une configuration de verrouillage, montrée sur les figures 3 à 5 et 10, et une configuration de déverrouillage, montrée sur les figures 6 à 9.

Comme expliqué ci-après, chaque déclencheur 110, 112 et 114 est configuré pour faire basculer le loquet de verrouillage 210 de la configuration de verrouillage à la configuration de déverrouillage, de façon directe ou indirecte, lorsque ledit déclencheur 110, 112 ou 114 concerné détecte un défaut électrique, du type prédéterminé pour ce déclencheur.

Dans le présent exemple, le loquet 210 comprend un verrou 212 et un crochet 214 qui coopèrent ensemble.

Ici, le crochet 214 s'étend à la fois dans les compartiments 48 et 50, de sorte à être visible sur les figures 3 à 10. En pratique, on prévoit que le crochet 214 s'étend à la fois dans le ou les compartiments recevant les déclencheurs pour être actionné par ces derniers. Le crochet 214 s'étend aussi dans le compartiment où se situe le verrou 212, pour coopérer avec ce dernier. Le crochet 214 est porté par l'étrier 152, en étant pivotant par rapport à l'étrier 152 autour d'un axe X214, nommé « axe de crochet », ici parallèle et non confondu avec l'axe d'étrier X152. Ce pivotement est opéré lorsque le loquet 210 évolue entre les configurations de verrouillage et de déverrouillage.

Dans le présent exemple, le crochet 214 comprend une première partie 216, disposée dans le même compartiment que le verrou 212, et une deuxième partie 218, disposée dans l'autre compartiment. Les première partie 216 et deuxième partie 218 sont fixement reliées l'une à l'autre, de préférence en étant encastrée l'une dans l'autre, de sorte que tout mouvement de la première partie 216 entraîne un mouvement identique de la deuxième partie 218, et inversement.

Ici, le verrou 212 s'étend dans le compartiment de gauche 50, de sorte à être visible sur les figures 3, 4, 6, 8 et 10. En pratique, on prévoit que le verrou 212 s'étend dans le même compartiment que celui de la bielle 200, pour coopérer avec cette dernière. Le verrou 212 est porté par l'étrier 152, en étant pivotant par rapport à l'étrier 152 autour d'un axe X212, nommé « axe de verrou », ici parallèle et non confondu avec l'axe X152. Dans l'exemple, l'axe de verrou X212 est porté par l'arbre de liaison 158 qui relie la platine 154 à la contre-platine 156.

De plus, un trou traversant 213 est ménagé dans le verrou 212.

En configuration de verrouillage, le crochet 214 est dans une orientation dite «orientation de maintien », où le crochet 214 maintient le verrou 212 dans une orientation dite « orientation de capture ». Pour cela, la première partie 216 du crochet 214 comprend par exemple un bras radial 220, contre lequel le verrou 212 vient en butée de rotation. En configuration de déverrouillage, le crochet 214 est dans une orientation dite « orientation de décrochage », où le crochet 214 autorise le verrou 212 à être pivoté par rapport à l'étrier 152. Dans le présent exemple, sous l'angle de la figure 3, le crochet 214 pivote dans le sens horaire pour passer de l'orientation de maintien à l'orientation de décrochage. Lorsque le crochet 214 est déplacé de l'orientation de décrochage à l'orientation de maintien, il ramène et maintient le verrou 212 en orientation de capture.

En d'autres termes, en configuration de verrouillage du loquet de verrouillage 210, le crochet 214 et le verrou 212 sont en contact, de sorte que le verrou 212 est empêché de tourner autour de l'axe de verrou X212 par le crochet 214, alors qu'en configuration de déverrouillage, le crochet 214 et le verrou 212 ne sont pas en contact, de sorte que le verrou 212 n'est pas empêché de pivoter autour de l'axe de verrou X212 par le crochet 214.

La valeur minimale du moment M lorsque l'étrier 152 est en position armée est avantageuse, car les efforts générés sur les surfaces du crochet 214 et du verrou 212 en contact sont aux aussi minimaux. En particulier, l'effort à exercer sur le crochet 214 pour nécessaire pour déplacer le crochet 214 de son orientation de maintien vers son orientation de décrochage est minimal, Autrement dit, le loquet 210 est particulièrement sensible.

Le mécanisme de commutation 150 comprend avantageusement un ressort 222, dit « ressort de loquet », visible sur les figures 5, 7 et 9. Ici, le ressort de loquet 222 est prévu dans le compartiment de droite 48. Le ressort 222 applique un effort sur le loquet de verrouillage 210, en prenant appui sur la contre-platine 156 de l'étrier 152, qui tend à ramener le loquet de verrouillage 210 de la configuration de déverrouillage vers la configuration de verrouillage.

Par exemple, le ressort 222 est un ressort hélicoïdal de torsion, dont une branche prend appui sur la contre-platine 156 et dont une autre branche prend appui sur la deuxième partie 218 du crochet 214, de sorte que le ressort 222 actionne le loquet 210 par l'intermédiaire du crochet 214. Le ressort de loquet 222 tend à ramener le crochet 214 de l'orientation de décrochage vers l'orientation de maintien.

La deuxième extrémité 204 de la bielle 200 est capturée par le loquet de verrouillage 210, en particulier par le verrou 212, lorsque le loquet 210 est en configuration de verrouillage, ici lorsque le verrou 212 est dans l'orientation de capture. En effet, la deuxième extrémité 204 de la bielle est disposée dans le trou traversant 213 du verrou 212. Alors, par l'intermédiaire du loquet 210, la deuxième extrémité 204 est attachée à l'étrier 152 en étant pivotante par rapport audit étrier 152.

En pratique, lorsque le loquet 210 est en configuration de verrouillage, la deuxième extrémité 204 de la bielle 200 est serrée entre les parois de la gorge 206 de la platine 154 et les parois du trou traversant 213 du verrou 212 et ne peut alors pas se déplacer par rapport à la platine 154 de l'étrier 152 ni par rapport au verrou 212.

Lorsque le loquet 210 est en configuration de déverrouillage, la deuxième extrémité 204 de la bielle 200 est libre de se déplacer dans la gorge 206 de la platine 154, et ce déplacement entraîne une rotation du verrou 212 autour de l'axe de verrou X212.

En configuration de verrouillage du loquet 210, la position de la manette de commutation 190 est assujettie à la position de l'étrier 152, et donc à la position des contacts mobiles 66 et 76, par l'intermédiaire de la bielle 200 et du loquet de verrouillage 210.

Dans cette situation, lorsque la manette de commutation 190 est actionnée de la position d'ouverture à la position de fermeture par un utilisateur, l'étrier 152 est mis en position armée, par l'intermédiaire de la bielle 200, dont la deuxième extrémité 204 est capturée par le loquet 210 pour entraîner l'étrier 152. L'étrier 152 étant mis en position armée, il met les contacts mobiles 66 et 76 en position de conduction, par l'intermédiaire des ressorts de contact 162 et 166.

En configuration de verrouillage du loquet 210, lorsque la manette de commutation 190 est mise dans la position d'ouverture par un utilisateur, l'étrier 152 est mis en position déclenchée, par l'intermédiaire de la bielle 200, dont la deuxième extrémité 204 est capturée par le loquet de verrouillage 210 pour entraîner l'étrier 152. L'étrier étant mis en position déclenchée, il met les contacts 66 et 76 en position d'isolement, par l'intermédiaire des cames 160 et 164 de la platine 154 et de la contre-platine 156.

Lorsque le loquet de verrouillage 210 est en configuration verrouillée, que l'étrier 152 est en position armée et que la manette de commutation 190 est en position de fermeture, l'étrier 152 et la manette de commutation 190 se maintiennent mutuellement en position, à l'encontre du ressort d'étrier 170, tendant à déplacer l'étrier 152 vers la position déclenchée, et du ressort de manette 196, tendant à déplacer la manette de commutation 190 vers la position d'ouverture.

Pour ainsi obtenir le maintien mutuel de l'étrier 152 et de la manette de commutation 190 on prévoit que, lorsque le loquet de verrouillage 210 est en configuration verrouillée, que l'étrier 152 est en position armée et que la manette 190 est en position de fermeture, alors la bielle 200 est dans une orientation verrouillante, montrée sur les figures 3 et 4, dans laquelle l'étrier 152 tend à maintenir la manette 190 dans la position de fermeture sous l'action du ressort d'étrier 170, l'étrier 152 étant alors lui-même maintenu en position armée par la manette de commutation 190 via la bielle 200.

Dans le présent exemple, la bielle 200 est dans l'orientation verrouillante lorsque la première extrémité 202 est positionnée dans une direction opposée à la direction Y30 par rapport à une droite, parallèle aux directions Y30 et Z30 et traversant l'axe de manette X190 et la deuxième extrémité 204.

En effet, la rotation de la manette de commutation 190 de la position de fermeture vers la position d'ouverture entraîne un mouvement de la première extrémité 202, dans un plan parallèle aux directions Y30 et Z30, qui décrit un arc de cercle centré sur l'axe de manette X190. Ce mouvement en arc de cercle conduit à un déplacement de la première extrémité 202 dans la direction opposée à la direction Z30, c'est-à-dire vers l'extrémité inférieure 38 du boîtier, tant que la bielle 200 est dans l'orientation verrouillante, puis à un déplacement de la première extrémité 202 dans la direction Z30 lorsque la bielle 200 n'est plus dans l'orientation verrouillante, c'est-à-dire lorsque la première extrémité est positionnée dans la direction Y30 par rapport à une droite, parallèle aux directions Y30 et Z30 et traversant l'axe de manette X190 et la deuxième extrémité 204.

Or, le déplacement de la première extrémité 202 dans la direction opposée à la direction Z30 entraîne un déplacement de la deuxième extrémité 204 dans la même direction. Ainsi, la deuxième extrémité 204 exerce un effort sur les parois de la gorge 206 de la platine 154 ainsi qu'un effort sur les parois du trou traversant 213 du verrou 212. Cet effort sur le verrou 212 tend à faire tourner le verrou 212 autour de l'axe de verrou X212 dans le sens horaire, sous l'angle des figures 3 et 4, ce qui tend à maintenir le loquet de verrouillage 210 en configuration de verrouillage. Ainsi, tant que la manette de commutation 190 est en position de fermeture, la bielle 200 maintien le loquet de verrouillage 210 en configuration de verrouillage.

De plus, cet effort sur la platine 154 tend à faire tourner l'étrier 152 dans le sens antihoraire, sous l'angle des figures 3 et 4, mais cette rotation est empêchée par le ressort d'étrier 170, qui exerce un effort plus important sur la platine 152 tendant à faire tourner l'étrier 152 dans le sens horaire.

Le verrou 212 et l'étrier 152 sont alors empêchés de tourner, ce qui empêche le déplacement de la deuxième extrémité 204 dans la direction opposée à la direction Z30 et ce qui empêche le déplacement de la première extrémité 202.

Ainsi, tant que le loquet 210 est en configuration de verrouillage et que la bielle 200 est dans l'orientation verrouillante, la manette de commutation 190 est empêchée de tourner.

De même, du fait de la position de la deuxième extrémité 204 par rapport à l'axe d'étrier X152, la rotation de l'étrier 152 de la position armée vers la position déclenchée entraîne un déplacement des extrémités 202 et 204 de la bielle 200 dans la direction Z30. Or, lorsque la bielle 200 est dans l'orientation verrouillante, compte-tenu de la position de la première extrémité 202 par rapport à l'axe de manette X190, un mouvement de la première extrémité 202 dans la direction Z30 entraîne une rotation de la manette de commutation 190 dans le sens horaire, sous l'angle des figures 3 et 4, ce qui tend à maintenir la manette en position de fermeture. Le déplacement de la première extrémité 202 est alors empêché, ce qui empêche la rotation de l'étrier 152 de la position armée vers la position déclenchée.

Ainsi, tant que le loquet 210 est en configuration de verrouillage et que la bielle 200 est dans l'orientation verrouillante, l'étrier 152 est empêché de tourner.

En résumé, lorsque le loquet 210 est en configuration de verrouillage et que la bielle 200 est dans l'orientation verrouillante, la manette de commutation 190 et l'étrier 152 se maintiennent mutuellement en position de fermeture et en position armée, par l'intermédiaire de la bielle 200.

Lorsque l'utilisateur actionne un pivotement de la manette de commutation 190 vers la position d'ouverture, la bielle est déplacée dans un premier temps dans la direction opposée à la direction Z30, comme décrit ci-avant, et l'effort d'actionnement fourni par l'utilisateur conduit à exercer un effort sur la platine 154 qui est suffisant pour entraîner la rotation de l'étrier 152 dans le sens antihoraire, sous l'angle des figures 3 et 4, à l'encontre de l'effort exercé par le ressort d'étrier 170.

Ainsi, grâce à l'effort d'actionnement de l'utilisateur, la bielle 200 est déplacée depuis son orientation verrouillante jusqu'à ce que la première extrémité 202 soit positionnée dans la direction Y30 par rapport à la droite, parallèle aux directions Y30 et Z30, qui traverse l'axe de manette X190 et la deuxième extrémité 204.

Lorsque la première extrémité 202 est située sur cette droite, et lorsque la première extrémité 202 est agencée dans la direction Y30 par rapport à ladite droite, la bielle 200 n'est plus dans l'orientation verrouillante, de sorte que le maintien en position mutuel entre l'étrier 152 et la manette de commutation 190 n'est plus assuré. Alors, sous l'effet du ressort d'étrier 170, l'étrier 154 est déplacé jusqu'à la position déclenchée et sous l'effet du ressort de manette 196, la manette de commutation 190 est ramenée jusqu'à la position d'ouverture. Lorsque l'étrier 152 est en position déclenchée et que la manette 190 est en position d'ouverture, ils sont maintenus dans ces positions par les ressorts d'étrier 170 et de manette 196.

Ainsi, lorsque la manette de commutation 190 est actionnée par un utilisateur vers la position d'ouverture, le loquet de verrouillage libère l'étrier 152 de sorte que l'étrier bascule vers la position déclenchée.

En résumé, lorsque le loquet de verrouillage 210 est en configuration de verrouillage et que la manette de commutation 190 est en position de fermeture, la manette 190 met le mécanisme de commutation 150 en configuration armée. Lorsque le loquet de verrouillage 210 est en configuration de verrouillage et que la manette 190 est en position d'ouverture, la manette 190 met le mécanisme de commutation 150 en configuration déclenchée.

On comprend en outre que le sens de rotation de la manette de commutation 190 est identique au sens de rotation de l'étrier 152. Par exemple, lorsque la manette de commutation 190 est actionnée vers la position d'ouverture, c'est-à-dire que la manette tourne autour de l'axe de manette X190 dans le sens horaire, sous l'angle des figures 3 et 4, alors l'étrier est basculé en position déclenchée en tournant autour de l'axe d'étrier X152 dans le sens horaire, sous l'angle des figures 3 et 4.

Chaque déclencheur 110, 112 et 114 est individuellement configuré pour déclencher une mise en configuration déclenchée du mécanisme de commutation 150, alors que le mécanisme de commutation 150 était en configuration armée, lorsque ledit déclencheur 110, 112 ou 114 est excité par le défaut électrique du type prédéterminé pour ce déclencheur 110, 112 ou 114. Cela conduit à une mise en position d'isolement des contacts mobiles 66 et 76 par le mécanisme de commutation 150, lorsque le défaut électrique se produit. Pour cela, chaque déclencheur 110, 112 et 114 est conçu pour déclencher un basculement du loquet de verrouillage 210 depuis la configuration de verrouillage, jusqu'à la configuration de déverrouillage.

Lorsque le loquet de verrouillage 210 est en configuration déverrouillée alors que l'étrier 152 est en position armée et que la manette de commutation 190 est en position de fermeture, la deuxième extrémité 204 de la bielle 200 est libre de se déplacer dans la gorge 206 de la platine 154 de l'étrier 152. En effet, lorsque le loquet de verrouillage 210 est en configuration déverrouillée, le verrou 212 est libre de tourner autour de l'axe de verrou X212 et la deuxième extrémité n'est plus serrée entre la gorge 206 et le trou traversant 213 du verrou 212.

Ici, la gorge 206 de la platine 154 forme un chemin sans embranchement le long duquel la deuxième extrémité 204 de la bielle 200 est autorisée à se déplacer.

Ainsi libérée, la bielle 200 n'opère plus un maintien mutuel en position de l'étrier 152 et de la manette de commutation 190. Alors, la manette 190 est ramenée vers la position d'ouverture sous l'action du ressort de manette 196 et l'étrier 152 est ramené vers la position déclenchée sous l'action du ressort d'étrier 170, l'étrier 152 entraînant alors les contacts mobiles 66 et 76 vers la position d'isolement.

Plus généralement, on prévoit que le mécanisme de commutation 150, en particulier le ressort de manette 196, ramène la manette de commutation 190 vers la position d'ouverture lorsque le mécanisme de commutation 150 est mis dans la configuration déclenchée, que ce soit par action de l'utilisateur sur la manette de commutation 190 elle-même, ou sous l'action d'un déclenchement opéré par l'un des déclencheurs 110, 112 ou 114.

Pour faire passer le loquet de verrouillage 210 de la configuration de verrouillage à la configuration de déverrouillage, le déclencheur magnétique 110 actionne par exemple une bascule 240 appartenant au mécanisme de commutation 150, la bascule 240 entraînant le crochet 214 jusqu'à la position de décrochage. La bascule 240 est visible sur les figures 5, 7 et 9.

Ici, la bascule 240 est attachée au boîtier 30, par exemple à la cloison interne 46, en étant pivotante par rapport au boîtier 30 autour d'un axe de bascule X240 parallèle à l'axe d'étrier X152, entre une position initiale montrée sur les figures 5 et 7, et une position de basculement montrée sur la figure 9.

Le déclencheur magnétique 110 entraîne la bascule 240 de la position initiale à la position de basculement par déplacement du noyau mobile 122, qui vient en appui contre une première extrémité 242 de la bascule 240, ici dans une direction opposée à la direction Z30. La bascule 240 présente une deuxième extrémité 244, qui vient en appui contre une jambe 246 appartenant à la deuxième partie 218 du crochet 214, dans la direction Z30, de sorte que le crochet 214 pivote jusqu'à l'orientation de décrochage sous l'action du pivotement de la bascule 240 jusqu'à la position de basculement, contre l'effort du ressort de loquet 222.

Une fois le défaut électrique terminé, le noyau mobile 122 reprend sa position initiale, et autorise la bascule 240 à être ramenée vers la position initiale, la bascule 240 autorisant ainsi le crochet 214 à être ramené vers l'orientation de maintien. Sous l'action du ressort de loquet 222, la bascule 240 est alors ramenée vers la position initiale par l'intermédiaire de la jambe 246 de la deuxième partie 218 du crochet 214, alors que le crochet 214 est lui-même ramené dans l'orientation de maintien par le ressort de loquet 222.

En outre, pour permettre un basculement plus rapide du contact mobile 76 de sa position de conduction à sa position d'isolement, lorsque le noyau mobile 122 est déplacé de sa position de repos à sa position déclenchée, il vient également impacter le porte-contact 96 du contact mobile 76. Ainsi, sous l'effet de l'impact du noyau mobile 122, le contact mobile 76 est directement déplacé en position d'isolement, sans attendre le pivotement de l'étrier 152. En pratique, le basculement du contact mobile 76 en position d'isolement est plus rapide que le basculement du loquet de verrouillage 210 en position déverrouillée et que le basculement de l'étrier 152 en position déclenchée, de sorte que, lorsque l'étrier bascule en position déclenchée, il entraîne uniquement le basculement du contact mobile 66 en position d'isolement et permet en outre de maintenir le contact mobile 76 en position d'isolement, du fait de l'action de la came 164.

Ce basculement rapide du contact mobile 76 est illustré aux figures 8 et 9, où le dispositif de protection électrique 12 est illustré selon deux angles différents à une même étape du déclenchement du déclencheur magnétique 110. On voit en effet à la figure 8 que le contact mobile 66 est en contact avec le contact fixe 68, alors que à la figure 9, le contact mobile 76 n'est pas en contact avec le contact fixe 78.

Pour faire passer le loquet de verrouillage 210 de la configuration de verrouillage à la configuration de déverrouillage, on peut prévoir que le déclencheur thermique 112 actionne aussi la bascule 240 de la position initiale à la position de bascule, ici par l'intermédiaire d'une biellette 250, appartenant au mécanisme de commutation 150.

Dans l'exemple, la biellette 250 comprend une première extrémité fixée au bilame formant le déclencheur 112 et guidée en translation dans une poche 252 ménagée dans la cloison interne 46 du boîtier 30 et une deuxième extrémité fixée à la première extrémité 242 de la bascule 240. Ainsi, la déformation du bilame sous l'effet d'un défaut électrique conduit à déplacer la biellette 250 dans une direction opposée à la direction Z30, de sorte que la bascule 240 est entraînée de la position initiale à la position de basculement, comme lorsque le noyau mobile 122 du déclencheur magnétique 120 vient en appui sur la première extrémité 242 de la bascule 240.

Pour faire passer le loquet de verrouillage 210 de la configuration de verrouillage à la configuration de déverrouillage, le déclencheur différentiel 114 actionne par exemple un amplificateur mécanique d'effort 260, qui est visible sur les figures 3, 4, 6 et 8, par l'intermédiaire de la tige mobile 130.

L'amplificateur 260 comprend par exemple un tiroir 262, un verrou 264, un ressort de tiroir 266, un ressort de verrou 268 et une béquille de réarmement 270.

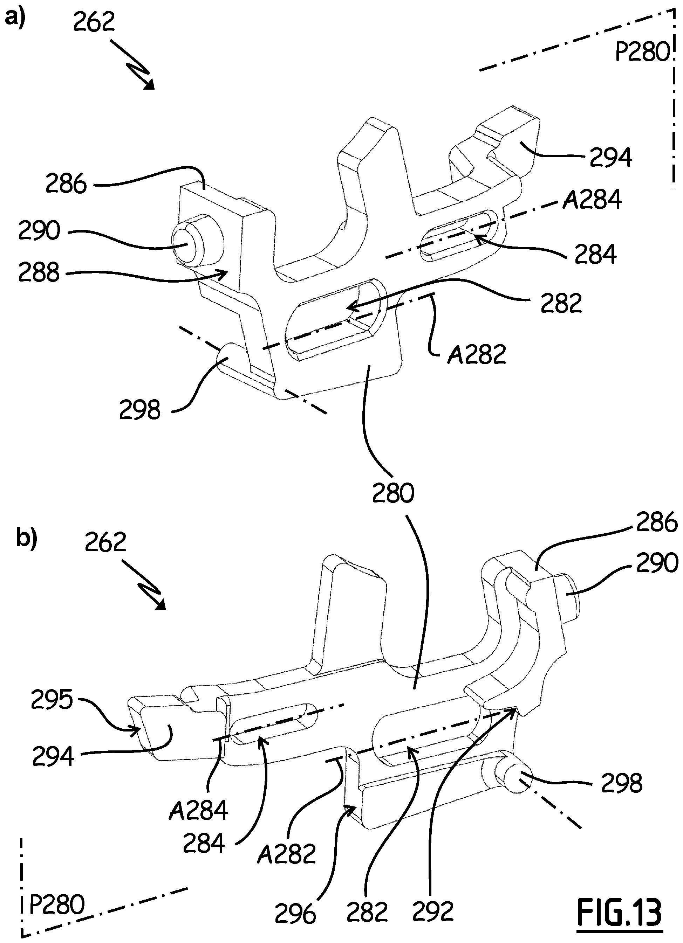

Le tiroir 262, qui est visible sur la figure 13, comprend un corps 280 qui s'étend selon un plan de tiroir P280 orthogonal à la direction X30 lorsque le dispositif de protection 12 est assemblé. Lorsque le tiroir 262 est assemblé au boitier 30, le plan de tiroir P280 est orthogonal à la direction de largeur X30, les mouvements du tiroir 262 étant guidés dans le plan de tiroir P280.

Dans l'exemple illustré, le tiroir 262 est guidé en translation par rapport au boitier 30. Le corps 280 comprend à cet effet deux trous oblongs 282 et 284, qui s'étendent respectivement selon un axe de guidage A282 et A284, qui sont parallèles entre eux. Chacun des trous oblongs 282 et 284 reçoit une tige appartenant au boitier 30, ici liée à la cloison interne 46, de manière à guider le tiroir 262 suivant l'un des axes de guidage A282 ou A284. Autrement dit le tiroir 262 est ici mobile en translation par rapport au boitier 30 suivant l'un des axes de guidage A282 ou A284.

Le ressort de tiroir 266 est ici un ressort de compression. Le corps 280 comprend une portion d'appui 286, configurée pour coopérer avec le ressort de tiroir 266 de manière à repousser le tiroir vers sa position déclenchée. La portion d'appui 286 comprend ici une face distale 288 et un pion de centrage 290. La face distale 288 est géométriquement portée par un plan orthogonal à l'axe de guidage X284, tandis que le pion de centrage 290 est ménagé en saillie sur une portion centrale de la face distale 288 et sert à maintenir le ressort de tiroir 266 centré, pour être en appui sur la face distale 288.

Le ressort de tiroir 266 est configuré pour rester comprimé quelle que soit la position du tiroir 262 et rester ainsi en appui sur la face distale 288, contribuant au bon fonctionnement de l'amplificateur mécanique d'effort.

Le corps 280 comprend aussi une encoche de verrouillage 292, une butée de déclenchement 294, une première butée de réarmement 296 et une deuxième butée de réarmement 298.

L'encoche de verrouillage 292 configurée pour coopérer avec le verrou 264 pour maintenir le tiroir 262 en position armée à l'encontre du ressort de tiroir 266.

La butée de déclenchement 294 comprend une face de poussée 295, qui est ici orientée à l'opposé de la face distale 288 et qui est configurée pour repousser une jambe 272, appartenant à la première partie 216 du crochet 214, lorsque le tiroir 262 se déplace de de la position armée à la position déclenchée.

La première butée de réarmement 296 est configurée pour coopérer avec une excroissance 297 appartenant au porte-contact 92 du premier chemin de conduction 60. Ainsi, lorsque le contact mobile 66 est déplacé de la position de conduction vers la position d'isolement, l'excroissance 297 appuie sur la première butée de réarmement 296 et repousse le tiroir 262 de sa position déclenchée vers sa position armée.

La deuxième butée de réarmement 298 présente ici une forme de cylindre de section circulaire centré sur un axe orthogonal au plan de tiroir P280. La deuxième butée de réarmement 298 est configurée pour repousser la béquille 270 lorsque le tiroir 262 est repoussé de sa position déclenchée vers sa position armée jusqu'à une position de réarmement, située au-delà de la position armée, la position armée étant une position intermédiaire entre la position de réarmement et la position déclenchée.

Ainsi, lorsque le contact mobile 66 est déplacé de la position de conduction vers la position d'isolement et repousse le tiroir 262 de sa position déclenchée jusqu'à la position de réarmement, le tiroir 262 est configuré pour réarmer le déclencheur 114 par l'intermédiaire de la béquille 270.

Le tiroir 262 est mobile par rapport au boîtier 30 entre une position armée, où le tiroir 262 autorise le loquet de verrouillage 210 à être en configuration de verrouillage, et une position déclenchée, où le tiroir 262 met le loquet 210 en configuration de déverrouillage. Autrement dit, en position déclenchée le tiroir 262 déclenche un basculement du mécanisme de commutation 150 vers la configuration déclenchée.

Pour cela, la butée de déclenchement 294 du tiroir 262 vient par exemple en appui contre la jambe 272 du crochet 214, lorsque le tiroir 262 est déplacé de la position armée à la position déclenchée, ce qui entraîne le crochet 214 depuis l'orientation de maintien jusqu'à l'orientation de décrochage. Le ressort de tiroir 266 applique un effort de déclenchement sur le tiroir 262, qui tend à déplacer le tiroir depuis la position armée jusqu'à la position de déclenchement. Lorsque le contact mobile 66 passe de la position de conduction à la position d'isolement, le contact mobile 66 ramène le tiroir 262 jusqu'à la position armée, à l'encontre de l'effort du ressort de tiroir 266, en venant en appui contre le tiroir 262.

Le verrou 264 présente ici globalement une forme de L, avec un bras d'appui 265A, configuré pour être repoussé par la béquille de réarmement 270, et un bras de blocage 265B. Lorsque l'encoche de verrouillage 292 coopère avec le verrou 264, le bras de blocage 265B est coincé dans l'encoche de verrouillage 292 et empêche les mouvements du tiroir 262 de la position armée vers la position déclenchée.

Le verrou 264 est ici monté pivotant par rapport au boitier 30, autour d'un axe de verrou X264 parallèle à la direction de largeur X30, entre une position de verrouillage, montrée sur les figures 3, 4, 6 et 8, où le verrou 264 est en regard de l'encoche de verrouillage 292 du tiroir 262, et une position de déverrouillage, non-visible sur les figures, où le verrou 264 autorise le tiroir 262 à être déplacé de la position armée à la position déclenchée par le ressort de tiroir 266, et à être ramené de la position déclenchée à la position armée par le contact mobile 66.

Sur les figures 3, 4 et 8, le verrou 264 est en appui contre l'encoche de verrouillage et maintient le tiroir 262 en position armée, contre l'action du ressort de tiroir 266, tandis que sur la figure 6, le verrou 264 est situé en regard de l'encoche de verrouillage 292 mais le tiroir 262 étant dans sa position de réarmement, le verrou 264 n'est pas au contact de l'encoche de verrouillage 292. Si le tiroir 262 se déplace depuis la position de réarmement vers la position armée, ce qui arrive si un utilisateur déplace les contacts 66 et 76 en position de conduction en actionnant la manette de commutation 190, la platine 154 se déplace de la position ouverte vers la position fermée, et le tiroir 262, chargé par le ressort de tiroir 266, vient au contact du verrou 264, qui maintient alors le tiroir en position armée.

Le ressort de verrou 268 exerce un effort de verrouillage sur le verrou 264, en prenant appui sur la cloison interne 46 du boîtier 30, qui tend à ramener le verrou 264 de la position de déverrouillage vers la position de verrouillage. La béquille de réarmement 270 est portée par le boîtier 30, en particulier à la cloison interne 46, et s'étend entre le verrou 264 et la tige mobile 130 du déclencheur 114.

La béquille de réarmement 270 sert à transmettre les efforts entre, d'une part, la tige mobile 130 et, d'autre part, le verrou 264 ou le tiroir 262, au cours de certaines des phases de fonctionnement du dispositif de protection électrique 12. La béquille de réarmement 270 est par exemple réalisée au moyen d'une lame métallique, qui est de préférence flexible, de manière à garantir le réarmement du relais 128 en absorbant les dispersions de positionnement de l'ensemble des composants internes du relais 128.

La béquille de réarmement 270 est ici montée pivotante par rapport au boitier 30 autour d'un axe de béquille X270 parallèle à la direction de largeur X30, entre une première position dite « de réarmement », montrée sur la figure 6, dans laquelle la béquille de réarmement 270 est repoussée par le tiroir 262 et transmet un effort à la tige 130, et une deuxième position, non visible sur les figures et dite « position de déverrouillage », dans laquelle la béquille 270 transmet un effort de la tige 130 au verrou 264 et entraine le verrou 264 dans sa position de déverrouillage. Lorsque la béquille 270 est en position de réarmement, la tige 130 repousse la plaquette 129 de manière à réarmer le relais 128.

Sur les figures 3, 4 et 8, la béquille 270 est représentée dans une position dite « neutre » intermédiaire entre la position de réarmement et la position de déverrouillage, dans laquelle la béquille 270 ne transmet aucun effort à tige 130 ni au verrou 264.

Lorsqu'un défaut différentiel se produit, la tige mobile 130 est déplacée, ici dans la direction Z30. Sous l'action du déplacement de la tige mobile 130, la béquille de réarmement 270 est pivotée entre la position neutre, montrée sur les figures 3, 4 et 8, et la position de déverrouillage, non-visible sur les figures. Dans ce pivotement, la béquille 270 entraîne le verrou 264 de sa position de verrouillage jusqu'à la position de déverrouillage, contre l'action du ressort de verrou 268. Le verrou 264 étant en position de déverrouillage, le tiroir 262 est autorisé à être déplacé de la position armée jusqu'à la position déclenchée, sous l'action du ressort de tiroir 266, et vient appuyer sur la jambe 272 du crochet 214, ce qui fait pivoter le crochet 214 depuis l'orientation de maintien jusqu'à l'orientation de décrochage.

Ce faisant, le tiroir 262 fait basculer le loquet de verrouillage 210 de la configuration de verrouillage à la configuration de déverrouillage. Libéré, l'étrier 152 fait basculer les contacts mobiles 66 et 76 de la position de conduction à la position d'isolement, en basculant lui-même de la position armée à la position déclenchée. Au cours de son pivotement vers la position d'isolement, le porte-contact 92 du contact 66 vient en appui contre le tiroir 262 de sorte à ramener le tiroir 262 vers la position armée, contre l'action du ressort de tiroir 266. Ce faisant, le tiroir 262 entraîne la béquille de réarmement 270 jusqu'à la position de réarmement. De ce fait, la tige mobile 130 est ramenée par la béquille 270 jusqu'à sa position de réarmement, de sorte que le déclencheur différentiel 114 est réarmé.

Au cours du déplacement du tiroir 262 vers la position armée, le tiroir 262 autorise le verrou 264 à être ramené jusqu'à la position de verrouillage par le ressort de verrou 268, de sorte que le verrou 264 est en regard de l'encoche de verrouillage du tiroir 262.

Dans cette situation, l'amplificateur mécanique 260 et le déclencheur différentiel 114 sont revenus dans leur configuration d'origine, pour permettre un nouveau déclenchement si un nouveau défaut survient. À ce moment-là, l'étrier 152 est en position déclenchée, les contacts mobiles 66 et 76 sont en position d'isolement et la manette de commutation 190 est en position d'ouverture.

Le mécanisme de commutation 150 décrit ici et son mode de déclenchement par les déclencheurs 110, 112 et 114 est donné seulement à titre d'exemple illustratif.

Avantageusement, le déclencheur magnétique 110 et le déclencheur thermique 112 peuvent être considérés comme un seul déclencheur, alors appelé « déclencheur magnétothermique », qui fait basculer le mécanisme de commutation 150 en configuration déclenchée lorsqu'un défaut électrique de type court-circuit ou surcharge de produit, en agissant sur la bascule 240.

Avantageusement, le fait que l'étrier 152 tourne dans un sens opposé aux contacts mobiles 66 et 76 permet de positionner le déclencheur magnétique 110 dans la partie supérieure du boîtier 30, en pratique au plus proche de l'extrémité supérieure 40 du boîtier. En effet, le positionnement du déclencheur magnétique est contraint par le sens de rotation du contact mobile 76, car la direction de sortie du noyau mobile 122 du déclencheur magnétique doit correspondre à la direction de déplacement du contact mobile 76, le contact mobile étant entraîné par le noyau mobile 122 lorsque le déclencheur magnétique 110 est excité par un défaut électrique.

En variante, le déclencheur 114 est remplacé par un autre composant fonctionnel qui est un déclencheur configuré pour être excité par un défaut électrique d'un type prédéterminé autre que les défauts électriques précités, tel que par exemple un arc électrique se produisant sur une installation connectée aux bornes de sortie 64 et 74, ou encore un déclencheur configuré pour être commandé par un système de communication, par exemple pour être déclenché lorsqu'un signal d'ouverture est communiqué.

En variante, le déclencheur 114 est remplacé par un autre composant fonctionnel qui est un système de surveillance. Un tel système de surveillance est en pratique un système de suivi configuré pour mesurer des grandeurs physiques représentatives du fonctionnement du dispositif de protection et/ou pour détecter l'état de fonctionnement du dispositif de protection et éventuellement configuré pour communiquer des informations avec un système d'information distant. Par exemple, un tel système de surveillance permet de compter le nombre de basculement de l'étrier 152 de la position armée à la position déclenchée.

Dans l'exemple illustré, le tiroir 262 est mobile en translation par rapport au boitier 30 dans le plan de tiroir P280, le tiroir 262 étant repoussé vers sa position déclenchée par le ressort de tiroir 266, qui est un ressort de compression.

En variante non représentée, le ressort de tiroir 266 est un ressort de traction, qui rappelle le tiroir 262 vers sa position déclenchée.

Selon une autre variante non représentée, le tiroir est mobile en rotation par rapport au boitier autour d'un axe de rotation parallèle à l'axe de largeur X30. Là aussi, le tiroir évolue dans un plan de déplacement orthogonal à l'axe de largeur X30. Selon les choix du concepteur et selon l'espace disponible dans le boitier du dispositif de protection électrique, le ressort de tiroir est, au choix, un ressort de compression, de traction, voire un ressort de torsion.

Dans l'exemple, le verrou 264 est monté pivotant par rapport au boitier 30. En variante non représentée le verrou 264 est porté par le tiroir 262.

Dans le mode de réalisation illustré, le dispositif d'amplification de puissance est fonctionnellement agencé entre le déclencheur différentiel et le mécanisme de commutation. Le principe de l'amplificateur de puissance peut être transposable à d'autres types de déclencheurs, notamment au déclencher thermique ou déclencheur magnétique.

## Revendications

1. Dispositif de protection électrique (12), comprenant
- un boitier (30),
- un premier chemin de conduction (60), comprenant une première borne d'entrée (62), une première borne de sortie (64) et un premier contact mobile (66), qui est mobile par rapport au boîtier, entre :
• une position de conduction (Fig. 3), dans laquelle le premier contact mobile connecte électriquement la première borne d'entrée à la première borne de sortie, et
• une position d'isolement (Fig. 6), dans laquelle la première borne d'entrée et la première borne de sortie sont électriquement isolées l'une de l'autre ;
- un mécanisme de commutation (150), qui est logé dans le boîtier et qui est configuré pour basculer entre :
• une configuration armée, dans laquelle le mécanisme de commutation met le premier contact en position de conduction, et
• une configuration déclenchée, dans laquelle le mécanisme de commutation met le premier contact en position d'isolement ;
- un déclencheur (114), qui est configuré pour faire basculer le mécanisme de commutation en configuration déclenchée lorsque le déclencheur est excité par un défaut électrique d'un type prédéterminé ;
**caractérisé en ce que** le dispositif de protection électrique (12) comprend, en outre :
- un tiroir (262), qui est mobile par rapport au boitier (30), entre une position armée (Fig.3), et une position déclenchée, dans laquelle le tiroir fait basculer le mécanisme de commutation (150) en configuration déclenchée,
- un ressort de tiroir (266), qui applique un effort de déclenchement sur le tiroir, en prenant appui sur le boîtier, l'effort de déclenchement tendant à déplacer le tiroir de la position armée vers la position déclenchée, et
- un verrou (264), qui est mobile entre une position de verrouillage, dans laquelle le verrou maintient le tiroir en position armée, et une position de déverrouillage, dans laquelle le verrou autorise le tiroir à être déplacé de la position armée vers la position déclenchée,
et **en ce que** le déclencheur (114) est configuré pour faire passer le verrou de sa position de verrouillage vers sa position de déverrouillage lorsque le déclencheur est excité.

2. Dispositif de protection électrique (12) selon la revendication 1, dans lequel :
- le mécanisme de commutation (150) comprend :
• une platine (154), qui est montée pivotante par rapport au boîtier (30) autour d'un axe de platine (X152), entre une position fermée et une position ouverte, la platine étant configurée pour, lorsque la platine passe de sa position fermée à sa position ouverte, déplacer le premier contact (66) de sa position de conduction vers sa position d'isolement,
• un ressort de platine (170), qui exerce un effort d'ouverture sur la première platine, tendant à déplacer la première platine de sa position fermée vers sa position ouverte,
• un loquet de verrouillage (210), qui est configuré pour évoluer entre une configuration verrouillée, dans laquelle le loquet de verrouillage maintient la platine (154) dans la position fermée, et une configuration déverrouillée, dans laquelle le loquet de verrouillage autorise la platine à pivoter de la position fermée à la position ouverte, et
• un ressort de loquet (222), qui exerce un effort de blocage sur le loquet de verrouillage, tendant à ramener le loquet de verrouillage vers la configuration verrouillée, lorsque le loquet de déclenchement est dans la configuration déverrouillée,
- pour faire basculer le mécanisme de commutation en configuration déclenchée, le tiroir (262) est configuré pour faire passer le loquet de verrouillage de sa configuration verrouillée à sa configuration déverrouillée, lorsque le tiroir se déplace de sa position armée vers sa position déclenchée.

3. Dispositif de protection électrique (12) selon la revendication 2, dans lequel :
- le ressort de platine (170) est un ressort de torsion, comprenant une première branche de sortie (172) et une deuxième branche de sortie (174), la première branche de sortie étant en appui sur le boitier (30) et la deuxième branche de sortie étant en appui sur une butée (176) appartenant à la platine (154), et
- lorsque la platine passe de sa position fermée à sa position ouverte, une distance (D) entre, d'une part, l'axe de platine (X152) et, d'autre part, un axe (D176) orthogonal à un point de contact entre la deuxième branche de sortie et la butée (176), augmente.

4. Dispositif de protection électrique (12) selon l'une quelconque des revendications précédentes, dans lequel :
- le déplacement du tiroir (262) de sa position armée vers sa position déclenchée est guidé dans un plan de déplacement (P280),
- le verrou (264) est monté pivotant par rapport au boitier (30) autour d'un axe de verrou (X264) orthogonal au plan de déplacement du tiroir, et comprend un bras d'appui (265A) et un bras de blocage (265B),
- le dispositif de protection électrique (12) comprend un ressort de verrou (268), qui tend à déplacer le verrou (264) de la position de déverrouillage vers la position de verrouillage,
- le tiroir comprend une encoche de verrouillage (292), le bras de blocage (265B) du verrou (264) étant configuré pour coopérer avec l'encoche de verrouillage pour maintenir le tiroir en position armée,
et dans lequel, lorsque le déclencheur (114) est excité, le déclencheur est configuré pour entraîner le verrou (264) de la position de verrouillage à la position de déverrouillage en exerçant un effort sur le bras d'appui (265A).

5. Dispositif de protection électrique (12) selon l'une quelconque des revendications précédentes, dans lequel :
- le ressort de tiroir (266) est un ressort de compression,
- le tiroir (262) comprend une portion d'appui (286), configurée pour coopérer avec le ressort de tiroir de manière à repousser le tiroir vers sa position déclenchée,
- le tiroir est mobile en translation par rapport au boitier (30), suivant un axe de tiroir (A284, A286).

6. Dispositif de protection électrique (12) selon l'une quelconque des revendications précédentes, dans lequel, lorsque le contact mobile (66) est déplacé de la position de conduction vers la position d'isolement :
- le contact mobile déplace le tiroir (262), de la position déclenchée vers la position armée, jusqu'à la position de réarmement,
- le verrou (264) reprend sa position verrouillée sous l'action de l'effort de verrouillage exercé par le ressort de verrou (268).

7. Dispositif de protection électrique (12) selon l'une quelconque des revendications précédentes, dans lequel :
- le dispositif de protection électrique (12) comprend une béquille de réarmement (270), qui est montée pivotante par rapport au boîtier (30) autour d'un axe de béquille (X270), entre une position neutre et une position de déverrouillage,
- lorsque le déclencheur (114) est excité par un défaut électrique, le déclencheur (114) est configuré pour entraîner le verrou (264) de la position de verrouillage vers la position de déverrouillage par l'intermédiaire de la béquille de réarmement, en entraînant la béquille de la position neutre à la position de déverrouillage,
- lorsque le contact mobile (66) est déplacé de la position de conduction vers la position d'isolement et repousse le tiroir (262) de sa position déclenchée vers sa position armée, le tiroir est configuré pour réarmer le déclencheur (114) par l'intermédiaire de la béquille (270), en entraînant béquille de la position de déverrouillage à une position de réarmement, située au-delà de la position neutre, la position neutre étant une position intermédiaire entre la position de réarmement et la position de déverrouillage.

8. Dispositif de protection électrique (12) selon l'une quelconque des revendications précédentes, dans lequel :
- le dispositif de protection comprend aussi un deuxième chemin de conduction (70), qui est électriquement isolé du premier chemin de conduction (60) et qui comprend une deuxième borne d'entrée (72), une deuxième borne de sortie (74) et un deuxième contact mobile (76), qui est mobile par rapport au boîtier (30), entre :
• une position de conduction, dans laquelle le deuxième contact mobile connecte électriquement la deuxième borne d'entrée à la deuxième borne de sortie, et
• une position d'isolement (Fig. 7), dans laquelle la deuxième borne d'entrée et la deuxième borne de sortie sont électriquement isolées l'une de l'autre ;
- le déclencheur (114) est un déclencheur différentiel, logé à l'intérieur du boitier (30) et comprenant :
• un capteur différentiel (126), configuré pour être excité lorsqu'un courant différentiel dépasse un seuil prédéterminé, le courant différentiel étant égal à une différence entre le courant circulant dans le premier chemin de conduction et le courant circulant dans le deuxième chemin de conduction,
• un relais (128), configuré pour faire passer le mécanisme de commutation (150) en configuration déclenchée lorsque le détecteur différentiel est excité.

9. Dispositif de protection électrique (12) selon la revendication précédente, dans lequel le capteur différentiel (126) est configuré pour générer une énergie électrique lorsque le courant différentiel est non nul, et dans lequel le relais (128) est un dispositif électromécanique configuré pour fonctionner uniquement avec l'énergie électrique générée par le détecteur différentiel.

10. Tableau électrique (10), comprenant un rail de fixation (16) et un dispositif de protection électrique (12), dans lequel le dispositif de protection électrique est selon l'une quelconque des revendications précédentes et est fixé sur le rail par l'intermédiaire du boîtier (30).

## Patentansprüche

1. Elektrische Schutzvorrichtung (12), umfassend:
- ein Gehäuse (30);
- einen ersten Leitungspfad (60), umfassend einen ersten Eingangsanschluss (62), einen ersten Ausgangsanschluss (64) und einen ersten beweglichen Kontakt (66), der in Bezug auf das Gehäuse beweglich ist zwischen:
• einer leitenden Position (Fig. 3), in der der erste bewegliche Kontakt den ersten Eingangsanschluss elektrisch mit dem ersten Ausgangsanschluss verbindet, und
• einer Isolationsposition (Fig. 6), in der der erste Eingangsanschluss und der erste Ausgangsanschluss elektrisch voneinander isoliert sind;
- einen Schaltmechanismus (150), der in dem Gehäuse untergebracht und konfiguriert ist, um umzuschalten zwischen:
• einer aktivierten Konfiguration, bei der der Schaltmechanismus den ersten Kontakt in die leitende Position bringt, und
• einer ausgelösten Konfiguration, in der der Schaltmechanismus den ersten Kontakt in eine isolierte Position bringt;
- einen Auslöser (114), der konfiguriert ist, um den Schaltmechanismus in die ausgelöste Konfiguration umzuschalten, wenn der Auslöser durch einen elektrischen Fehler einer vorbestimmten Art erregt wird;
**dadurch gekennzeichnet, dass** die elektrische Schutzvorrichtung (12) ferner Folgendes umfasst:
- einen Schieber (262), der in Bezug auf das Gehäuse (30) zwischen einer gespannten Position (Fig. 3) und einer ausgelösten Position, in der der Schieber den Schaltmechanismus (150) in die ausgelöste Konfiguration kippt, beweglich ist,
- eine Schieberfeder (266), die eine Auslösekraft auf den Schieber ausübt, indem sie sich am Gehäuse abstützt, wobei die Auslösekraft dazu neigt, den Schieber aus der gespannten Stellung in die ausgelöste Stellung zu bewegen, und
- einen Riegel (264), der zwischen einer Verriegelungsposition, in der der Riegel den Schieber in der gespannten Position hält, und einer Entriegelungsposition beweglich ist, in der der Riegel zulässt, dass der Schieber von der gespannten Position in die ausgelöste Position bewegt wird,
und dass der Auslöser (114) konfiguriert ist, um den Riegel aus seiner Verriegelungsposition in seine Entriegelungsposition zu bewegen, wenn der Auslöser erregt wird.

2. Elektrische Schutzvorrichtung (12) nach Anspruch 1, wobei: der Schaltmechanismus (150) Folgendes umfasst:
- eine Platine (154), die in Bezug auf das Gehäuse (30) um eine Platinenachse (X152) zwischen einer geschlossenen Position und einer offenen Position schwenkbar angebracht ist, wobei die Platine konfiguriert ist, um, wenn die Platine von ihrer geschlossenen Position in ihre offene Position übergeht, den ersten Kontakt (66) von seiner leitenden Position in seine isolierende Position bewegt,
• eine Platinenfeder (170), die eine Öffnungskraft auf die erste Platine ausübt, die dazu neigt, die erste Platine aus ihrer geschlossenen Position in ihre offene Position zu bewegen,
• einen Verriegelungsriegel (210), der konfiguriert ist, um sich zwischen einer verriegelten Konfiguration, in der der Verriegelungsriegel die Platte (154) in der geschlossenen Position hält, und einer entriegelten Konfiguration, in der der Verriegelungsriegel es der Platte erlaubt, von der geschlossenen Position in die offene Position zu schwenken, zu bewegen, und
• eine Klinkenfeder (222), die eine Arretierkraft auf die Sperrklinke ausübt, die dazu neigt, die Sperrklinke in die verriegelte Konfiguration zurückzuführen, wenn die Auslöseklinke in der unverriegelten Konfiguration ist,
- zum Umschalten des Schaltmechanismus in die ausgelöste Konfiguration, der Schieber (262) konfiguriert ist, um die Sperrklinke von ihrer verriegelten Konfiguration in ihre entriegelte Konfiguration umzuschalten, wenn sich der Schieber von seiner gespannten Position in seine ausgelöste Position bewegt.

3. Elektrische Schutzvorrichtung (12) nach Anspruch 2, wobei:
- die Platinenfeder (170) eine Torsionsfeder ist, umfassend einen ersten Ausgangsschenkel (172) und einen zweiten Ausgangsschenkel (174), wobei der erste Ausgangsschenkel an dem Gehäuse (30) anliegt und der zweite Ausgangsschenkel an einem zu der Platine (154) gehörenden Anschlag (176) anliegt, und
- wenn die Platte von ihrer geschlossenen Position in ihre offene Position übergeht, ein Abstand (D) zwischen einerseits der Plattenachse (X152) und andererseits einer Achse (D176), die orthogonal zu einem Kontaktpunkt zwischen dem zweiten Ausgangszweig und dem Anschlag (176) verläuft, zunimmt.

4. Elektrische Schutzvorrichtung (12) nach einem der vorherigen Ansprüche, wobei:
- die Bewegung des Schiebers (262) von seiner gespannten Position in seine ausgelöste Position in einer Bewegungsebene (P280) geführt wird,
- der Riegel (264) in Bezug auf das Gehäuse (30) um eine Riegelachse (X264), die orthogonal zu der Bewegungsebene der Schieber ist, schwenkbar montiert ist und einen Stützarm (265A) und einen Arretierarm (265B) umfasst,
- die elektrische Schutzvorrichtung (12) eine Riegelfeder (268) umfasst, die dazu neigt, den Riegel (264) aus der Entriegelungsposition in die Verriegelungsposition zu bewegen,
- der Schieber eine Verriegelungskerbe (292) umfasst, wobei der Arretierarm (265B) des Riegels (264) konfiguriert ist, um mit der Verriegelungskerbe zusammenzuwirken, um den Schieber in der aktivierten Position zu halten,
und wobei, wenn der Auslöser (114) erregt wird, der Auslöser konfiguriert ist, um den Riegel (264) aus der Verriegelungsposition in die Entriegelungsposition zu treiben, indem er eine Kraft auf den Stützarm (265A) ausübt.

5. Elektrische Schutzvorrichtung (12) nach einem der vorherigen Ansprüche, wobei:
- die Schieberfeder (266) eine Druckfeder ist,
- der Schieber (262) einen Stützabschnitt (286) umfasst, der konfiguriert ist, um mit der Schieberfeder zusammenzuwirken, um den Schieber in seine ausgelöste Position zu drücken,
- der Schieber in Bezug auf das Gehäuse (30) entlang einer Schieberachse (A284, A286) translatorisch beweglich ist.

6. Elektrische Schutzvorrichtung (12) nach einem der vorherigen Ansprüche, wobei, wenn der bewegliche Kontakt (66) von der leitenden Position in die isolierende Position bewegt wird:
- der bewegliche Kontakt den Schieber (262) von der ausgelösten Position in die aktivierte Position bis zu der Rückstellposition bewegt,
- der Riegel (264) unter der Wirkung der von der Riegelfeder (268) ausgeübten Verriegelungskraft in seine verriegelte Position zurückkehrt.

7. Elektrische Schutzvorrichtung (12) nach einem der vorherigen Ansprüche, wobei:
- die elektrische Schutzvorrichtung (12) einen Rückstelldrücker (270) umfasst, der in Bezug auf das Gehäuse (30) um eine Drückerachse (X270) zwischen einer Neutralstellung und einer Entriegelungsstellung schwenkbar angebracht ist,
- wenn der Auslöser (114) durch einen elektrischen Fehler erregt wird, der Auslöser (114) konfiguriert ist, um die Verriegelung (264) über den Rückstelldrücker von der Verriegelungsposition in die Entriegelungsposition zu treiben, indem der Rückstelldrücker von der Neutralstellung in die Entriegelungsstellung getrieben wird,
- wenn der bewegliche Kontakt (66) aus der leitenden Position in die isolierte Position bewegt wird und den Schieber (262) aus seiner ausgelösten Position in seine gespannte Position drückt, der Schieber konfiguriert ist, um den Auslöser (114) über den Drücker (270) wieder zu aktivieren, indem er den Drücker aus der Entriegelungsposition in eine Rückstellposition jenseits der neutralen Position treibt, wobei die Neutralstellung eine Zwischenposition zwischen der Rückstellposition und der Entriegelungsposition ist.

8. Elektrische Schutzvorrichtung (12) nach einem der vorherigen Ansprüche, wobei:
- die Schutzvorrichtung auch einen zweiten Leitungspfad (70) umfasst, der von dem ersten Leitungspfad (60) elektrisch isoliert ist und der einen zweiten Eingangsanschluss (72), einen zweiten Ausgangsanschluss (74) und einen zweiten beweglichen Kontakt (76) umfasst, der in Bezug auf das Gehäuse (30) beweglich ist zwischen:
• einer leitenden Position, in der der zweite bewegliche Kontakt den zweiten Eingangsanschluss elektrisch mit dem zweiten Ausgangsanschluss verbindet, und
• einer isolierenden Position (Fig. 7), in der der zweite Eingangsanschluss und der zweite Ausgangsanschluss elektrisch voneinander isoliert sind;
• der Auslöser (114) ein Differentialauslöser ist, der im Inneren des Gehäuses (30) untergebracht ist und Folgendes umfasst:
• einen Differenzsensor (126), der konfiguriert ist, um erregt zu werden, wenn ein Differenzstrom einen vorbestimmten Schwellenwert überschreitet, wobei der Differenzstrom gleich wie eine Differenz zwischen dem in dem ersten Leitungspfad fließenden Strom und dem in dem zweiten Leitungspfad fließenden Strom ist,
• ein Relais (128), das konfiguriert ist, um den Schaltmechanismus (150) in die ausgelöste Konfiguration zu schalten, wenn der Differenzdetektor erregt wird.

9. Elektrische Schutzvorrichtung (12) nach dem vorherigen Anspruch, wobei der Differenzsensor (126) konfiguriert ist, um elektrische Energie zu erzeugen, wenn der Differentialstrom ungleich Null ist, und wobei das Relais (128) eine elektromechanische Vorrichtung ist, die konfiguriert ist, um nur mit der elektrischen Energie betrieben zu werden, die durch den Differentialsensor erzeugt wird.

10. Elektrische Schalttafel (10), umfassend eine Befestigungsschiene (16) und eine elektrische Schutzvorrichtung (12), wobei die elektrische Schutzvorrichtung nach einem der vorherigen Ansprüche ist und über das Gehäuse (30) an der Schiene befestigt ist.

## Claims

1. An electrical protection device (12), comprising
- a casing (30),
- a first conducting path (60), comprising a first input terminal (62), a first output terminal (64) and a first movable contact (66), which is movable relative to the casing, between:
• a conducting position (Fig. 3), in which the first movable contact electrically connects the first input terminal to the first output terminal, and
• an isolating position (Fig. 6), in which the first input terminal and the first output terminal are electrically isolated from each other;
- a switching mechanism (150), which is housed in the casing and is configured to switch between:
• a set configuration, in which the switching mechanism places the first contact in the conducting position, and
• a tripped configuration, in which the switching mechanism places the first contact in the isolating position;
- a trip device (114), which is configured to switch the switching mechanism to the tripped configuration when the trip device is excited by an electrical fault of a predetermined type;
**characterised in that** the electrical protection device (12) further comprises:
- a spool (262) which is movable relative to the casing (30) between a set position (Fig. 3) and a tripped position, in which the spool causes the switching mechanism (150) to switch to the tripped configuration,
- a spool spring (266), which applies a release force to the spool, resting on the casing, the release force tending to move the spool from the set position to the tripped position, and
- a latch (264), which is movable between a locked position, in which the latch holds the spool in the set position, and an unlocked position, in which the latch allows the spool to be moved from the set position to the tripped position,
and **in that** the trip device (114) is configured to move the latch from its locked position to its unlocked position when the trip device is energised.

2. The electrical protection device (12) according to claim 1, wherein: the
- switching mechanism (150) comprises:
• a plate (154), which is mounted so as to pivot with respect to the casing (30) about a plate axis (X152), between a closed position and an open position, the plate being configured so as to, when the plate changes from its closed position to its open position, move the first contact (66) from its conducting position to its isolating position,
• a plate spring (170), which exerts an opening force on the first plate, tending to move the first plate from its closed position to its open position,
• a locking catch (210), which is configured to move between a locked configuration, in which the locking catch holds the plate (154) in the closed position, and an unlocked configuration, in which the locking catch allows the plate to pivot from the closed position to the open position, and
• a catch spring (222), which exerts a blocking force on the locking catch, tending to return the locking catch to the locked configuration, when the trip catch is in the unlocked configuration,
- to switch the switching mechanism to the disengaged configuration, the spool (262) is configured to move the locking catch from its locked configuration to its unlocked configuration, when the spool moves from its set position to its tripped position.

3. The electrical protection device (12) according to claim 2, wherein:
- the plate spring (170) is a torsion spring, comprising a first output branch (172) and a second output branch (174), the first output branch bearing on the casing (30) and the second output branch bearing on a stop (176) belonging to the plate (154), and
- when the plate moves from its closed position to its open position, a distance (D) between, on the one hand, the plate axis (X152) and, on the other hand, an axis (D176) orthogonal to a contact point between the second output branch and the stop (176), increases.

4. The electrical protection device (12) according to any one of the preceding claims, wherein:
- the movement of the spool (262) from its set position to its tripped position is guided in a plane of movement (P280),
- the latch (264) is mounted so as to pivot relative to the casing (30) about a latch axis (X264) orthogonal to the plane of movement of the spool, and comprises a support arm (265A) and a locking arm (265B),
- the electrical protection device (12) comprises a latch spring (268), which tends to move the latch (264) from the unlocked position to the locked position,
- the spool comprises a locking notch (292), the locking arm (265B) of the latch (264) being configured to cooperate with the locking notch to hold the spool in the set position,
and wherein, when the trip device (114) is energised, the trip device is configured to drive the latch (264) from the locked position to the unlocked position by exerting a force on the support arm (265A).

5. The electrical protection device (12) according to any one of the preceding claims, wherein:
- the spool spring (266) is a compression spring,
- the spool (262) comprises a support portion (286), configured to cooperate with the spool spring so as to push the spool towards its tripped position,
- the spool can be moved in translation relative to the casing (30) along a spool axis (A284, A286).

6. The electrical protection device (12) according to any one of the preceding claims, wherein, when the movable contact (66) is moved from the conducting position to the isolating position:
- the movable contact moves the spool (262) from the tripped position to the set position, until it reaches the reset position,
- the latch (264) returns to its locked position under the action of the locking force exerted by the latch spring (268).

7. The electrical protection device (12) according to any one of the preceding claims, wherein:
- the electrical protection device (12) comprises a reset lever handle (270), which is mounted so as to pivot relative to the casing (30) about a lever handle axis (X270), between a neutral position and an unlocked position,
- when the trip device (114) is energised by an electrical fault, the trip device (114) is configured to drive the latch (264) from the locked position to the unlocked position via the reset lever handle, by driving the lever handle from the neutral position to the unlocked position,
- when the movable contact (66) is moved from the conducting position to the isolating position and pushes the spool (262) from its tripped position to its set position, the spool is configured to reset the trip device (114) by means of the lever handle (270) by driving the lever handle from the unlocked position to a reset position located beyond the neutral position, the neutral position being an intermediate position between the reset position and the unlocked position.

8. The electrical protection device (12) according to any one of the preceding claims, wherein:
- the protection device further comprises a second conducting path (70), which is electrically isolated from the first conducting path (60) and which comprises a second input terminal (72), a second output terminal (74) and a second movable contact (76), which is movable relative to the casing (30), between:
• a conducting position, in which the second movable contact electrically connects the second input terminal to the second output terminal, and
• an isolating position (Fig. 7), in which the second input terminal and the second output terminal are electrically isolated from each other;
• the trip device (114) is a differential trip device housed inside the casing (30) and comprising:
• a differential sensor (126), configured to be energised when a differential current exceeds a predetermined threshold, the differential current being equal to a difference between the current flowing in the first conducting path and the current flowing in the second conducting path,
• a relay (128), configured to switch the switching mechanism (150) to the tripped configuration when the differential detector is energised.

9. The electrical protection device (12) according to the preceding claim, wherein the differential sensor (126) is configured to generate electrical energy when the differential current is non-zero, and wherein the relay (128) is an electromechanical device configured to operate solely with the electrical energy generated by the differential sensor.

10. An electrical panel (10), comprising an attachment rail (16) and an electrical protection device (12), wherein the electrical protection device is according to any one of the preceding claims and is attached to the rail by means of the casing (30).
